# EUROPÄISCHE PATENTSCHRIFT

(11) **EP 3 700 782 B1**
(45) Veröffentlichungstag und Bekanntmachung des Hinweises auf die Patenterteilung: **27.04.2022**
(21) Anmeldenummer: 18786349.3
(22) Anmeldetag: 18.10.2018
(51) Int. Cl.: B60R 11/04

(54) **FAHRZEUGANBAUTEIL MIT INTEGRIERTEM KAMERAMODUL**
VEHICLE ATTACHMENT WITH INTEGRATED CAMERA MODULE
ENSEMBLE DE VÉHICULE POURVU DE MODULE DE CAMÉRA INTÉGRÉ

(30) Priorität: 26.10.2017 EP 17198521
(43) Veröffentlichungstag der Anmeldung: 02.09.2020
(73) Patentinhaber: SAINT-GOBAIN GLASS FRANCE, 92400 Courbevoie (FR)
(72) Erfinder: BLANCHE, Luc-Henry, 58095 Hagen (DE); FRIOCOURT, Laurent, 70190 Stuttgart (DE); GULDAN, Marcus, 73066 Uhingen (DE); MOSNIER, Clément, 71364 Winnenden (DE)
(74) Vertreter: Gebauer, Dieter Edmund
(86) Internationale Anmeldenummer: PCT/EP2018/078480
(87) Internationale Veröffentlichungsnummer: WO 2019/081315

(56) Entgegenhaltungen:
- DE-A1-102004 024 735
- DE-A1-102006 059 555

## Beschreibung

Die Erfindung betrifft ein Anbauteil für ein Fahrzeug, im folgenden auch Fahrzeuganbauteil oder kurz Anbauteil genannt, in das ein Kameramodul integriert ist, dessen Herstellung und Verwendung.

Moderne Fahrzeugkonzepte weisen häufig leistungsfähige Fahrerassistenzsysteme und insbesondere Systeme für autonomes Fahren auf. Hierfür wird eine aufwändige Sensorik benötigt, um die sehr umfangreichen Umgebungsdaten zu erfassen und auszuwerten. Neben Funk- und Radarsystemen kommen hier auch optische Systeme zum Einsatz.

Aus designtechnischen Gründen ist es für den Fahrzeughersteller wünschenswert, diese Sensorik für den Außenbetrachter möglichst unsichtbar im oder am Fahrzeug unterzubringen. Im Falle von Kamerasystemen, die eine Sicht auf die Umgebung auch im visuellen Spektrum des Lichts von 380 nm bis 780 nm erfordern, werden diese üblicherweise geschickt hinter Mineralglas angebracht und damit für den Betrachter unter üblichen Lichtbedingungen verdeckt bzw. verschleiert.

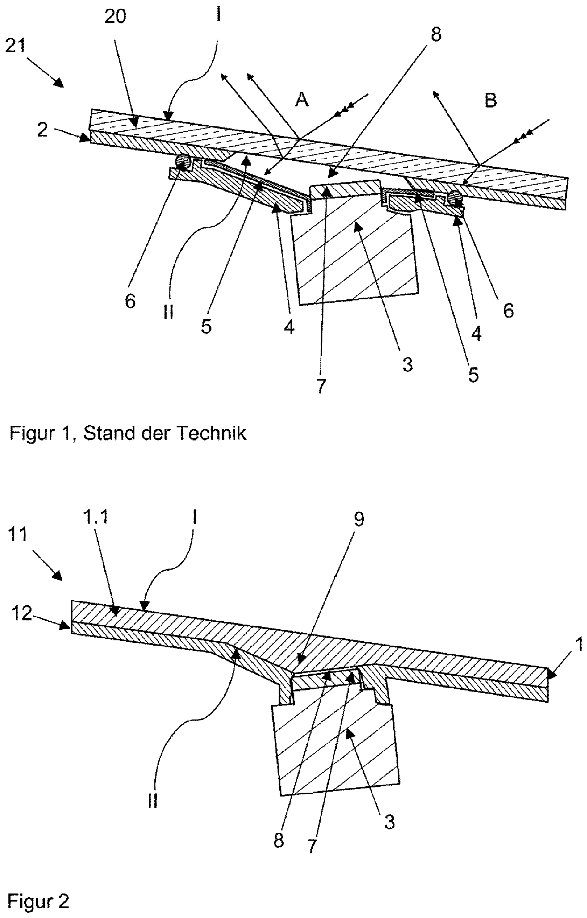

In Abhängigkeit der Stärke und des Winkels des auf der Bauteiloberfläche auftreffenden Lichts und des Betrachtungswinkels sind einem solchen Konzept jedoch gewisse Grenzen gesetzt. Unter bestimmten Voraussetzungen können die hinter einer transparenten Abdeckung integrierten Baugruppen sichtbar werden. Daher ist es wichtig, diese so klein und damit so unauffällig wie möglich zu gestalten. Im Falle eines Kameramoduls sind dies die Kameralinse und ggf. die Befestigungselemente sowie Kabel. Von Bedeutung ist aber auch der für die Sicht der Kamera benötigte kegelförmige Öffnungswinkel. Für die Sichtbarkeit des Kameramoduls von außen sind sowohl die Lichtreflexion an der Außenhaut der Abdeckung, als auch die Reflexion an der Innenhaut der Abdeckung bzw. der Grenzfläche von Abdeckung und Trägerteil entscheidend (Figur 1).

Um das Kameraelement bei Anbauteilen möglichst unsichtbar zu gestalten, wird im Stand der Technik der unmittelbare Bereich um die Linse schwarz beflockt. Die Beflockung absorbiert das durch die transparente Abdeckung eingedrungene Licht (d.h. das nicht reflektierte Licht), welches dann nicht wieder austreten kann. Der Kamerabereich hebt sich für den Betrachter aufgrund des teilreflektierten Lichts an der Grenzfläche zwischen Innenhaut und Luft von dem schwarz hinterspritzten Bereich ab.

Die Blickrichtung der Kameralinse im Anbauteil ist häufig nicht senkrecht zur Außenhaut des Anbauteils, d.h. der Außenseite der Abdeckung, ausgerichtet, sondern bevorzugt leicht nach unten und/oder leicht zur Seite, um beispielsweise Teile der Straße abzubilden. Dies erfordert bei Anbauteilen nach dem Stand der Technik einen größeren Bauraum und erhöht damit das Risiko eines vermehrten Wasser- bzw. Wasserdampfeintritts. Je mehr Luft sich im Raum zwischen der Linse und der Abdeckung befindet, desto eher können die optischen Eigenschaften des Kamerasystems beeinträchtigt werden, da möglicher Wasserdampf kondensieren kann.

Um diese Beeinträchtigung zu vermeiden, werden nach dem Stand der Technik mikroporöse Membranen, insbesondere Membranen aus expandiertem Polytetrafluorethylen (ePTFE) in das Fahrzeuganbauteil mit integriertem Kameramodul integriert, um flüssiges Wasser aus dem Zwischenraum fernzuhalten und zugleich ein Abdampfen von Wasserdampf aus dem Inneren zu ermöglichen. Dies erhöht jedoch die Produktionskosten und bringt mit der Integration der Membranen einen weiteren Herstellungsschritt mit sich.

Alternativ werden nach dem Stand der Technik, wie in der DE 10 2004 057 322 A1 beschrieben, Antibeschlagschichten auf der der Kamera zugewandten Oberfläche der Scheibe aufgebracht.

In der US 2008/0112050 A1 ist beschrieben, die Oberfläche eines Linsenteils mit einer hydrophoben Schicht zu versehen und die Oberfläche eines die Linse umgebenen Teils mit einer hydrophilen Schicht zu versehen.

In der WO 2013/13700 A1 ist offenbart, eine Heizvorrichtung in dem Fahrzeugteil anzuordnen, um die Kondensation von Wasserdampf zu vermeiden.

In der DE 10 2006 059 555 A1 ist eine Kameraanordnung mit einer eine Scheibe durchblickenden Kamera offenbart, wobei ein Raum zwischen Kamera und Scheibe mit einem kondensierten Medium gefüllt ist.

Die DE 10 2004 024 735 A1 zeigt eine Kameraanordnung, bei der zwischen Kameraobjektiv und Fahrzeugscheibe ein Lichtleitkörper aus einem festen und optisch transparenten Material angeordnet ist.

Die Aufgabe der Erfindung liegt darin, ein Fahrzeuganbauteil bereitzustellen, in das ein Kameramodul integriert ist, das ein geringes Gewicht aufweist, in wenigen Schritten herstellbar ist, in dem die Gefahr eines Beschlagens durch Wasserdampf minimiert ist und/oder in dem das integrierte Kameramodul von außen möglichst unsichtbar ist.

Die Aufgabe der vorliegenden Erfindung wird erfindungsgemäß durch ein Fahrzeuganbauteil mit integriertem Kameramodul, ein Verfahren zu dessen Herstellung und dessen Verwendung nach den unabhängigen Ansprüchen gelöst. Bevorzugte Ausführungen gehen aus den Unteransprüchen hervor.

Das erfindungsgemäße Anbauteil umfasst mindestens eine Abdeckung mit einer Außenseite und einer Innenseite und ein Trägerteil, das an der Innenseite der Abdeckung angeordnet ist und in dem ein Kameramodul angeordnet ist. Das Kameramodul umfasst mindestens eine Kameralinse. Das Modul kann eine einzelne Kameralinse umfassen oder zwei oder mehr, bevorzugt nebeneinander angeordnete Kameralinsen. Die mindestens eine Kameralinse ist in Richtung der Innenseite der Abdeckung angeordnet, so dass der Strahlengang zur Kameralinse von außen durch die Abdeckung hindurch verläuft.

Diejenige Oberfläche der Abdeckung, welche in Einbaulage der äußeren Umgebung des Fahrzeugs zugewandt ist, wird als Außenseite bezeichnet. Diejenige Oberfläche der Abdeckung, welche in Einbaulage dem Innenraum des Fahrzeugs zugewandt ist, wird als Innenseite bezeichnet.

Die Kameralinse kann jeden geeigneten Durchmesser haben. Der Durchmesser der Kameralinse ist bevorzugt zwischen 1 mm und 100 mm, besonders bevorzugt zwischen 1 mm und 50 mm, ganz besonders bevorzugt zwischen 5 mm und 30 mm, beispielsweise 11 mm.

Die Abdeckung besteht erfindungsgemäß zumindest teilweise aus einem transparenten thermoplastischen Kunststoff. Sie kann neben dem transparenten thermoplastischen Kunststoff beispielsweise eine Folie, einen intransparenten Kunststoff und/oder Metallteile enthalten. In einer bevorzugten Ausführungsform besteht die Abdeckung vollständig aus transparentem thermoplastischem Kunststoff.

Erfindungsgemäß weist der transparente thermoplastische Kunststoff der Abdeckung an der Innenseite der Abdeckung eine lokale Verdickung und/oder Ausdünnung auf, d.h. der transparente thermoplastische Kunststoff ist in einem bestimmten Bereich verdickt und/oder in einem bestimmten Bereich ausgedünnt. Die Verdickung und/oder die Ausdünnung ist im erfindungsgemäßen Fahrzeuganbauteil der Kameralinse unmittelbar gegenüberliegend angeordnet. Das heißt, der Punkt der maximalen Dicke der Verdickung und/oder der Punkt der minimalen Dicke der Ausdünnung ist der Kameralinse unmittelbar gegenüberliegend angeordnet. Dabei müssen diese Punkte nicht unmittelbar gegenüberliegend der Mitte der Kameralinse angeordnet sein, sie können beispielsweise auch unmittelbar gegenüberliegend eines Randes oder Randbereiches der Kameralinse angeordnet sein. Der Gesamtbereich der Abdeckung, der verdickt und/oder ausgedünnt ist, entspricht bevorzugt mindestens den Maßen der Kameralinse, besonders bevorzugt den Maßen des für das Kameramodul benötigten Kegelwinkels. Erfindungsgemäß reicht der transparente thermoplastische Kunststoff der Abdeckung im Bereich der lokalen Verdickung und/oder Ausdünnung bis an die Kameralinse heran, so dass die Innenseite der Abdeckung annähernd bündig mit der Kameralinse verbunden ist. Der Bereich zwischen der Außenseite der Abdeckung und der Kameralinse ist somit bei dem erfindungsgemäßen Anbauteil nahezu vollständig mit dem thermoplastischen Kunststoff der Abdeckung ausgefüllt.

In einer Ausführungsform umfasst das Fahrzeuganbauteil mit einem integrierten Kameramodul eine Abdeckung mit einer Außenseite und einer Innenseite, wobei die Abdeckung zumindest abschnittsweise aus einem transparenten thermoplastischen Kunststoff besteht, und ein Trägerteil, das an der Innenseite der Abdeckung angeordnet ist und in dem ein Kameramodul angeordnet ist, wobei die Abdeckung an der Innenseite eine lokale Verdickung des transparenten thermoplastischen Kunststoffs aufweist, und wobei das Kameramodul zumindest eine Kameralinse umfasst und derartig in dem Trägerteil angeordnet ist, dass die zumindest eine Kameralinse der lokalen Verdickung unmittelbar gegenüberliegend angeordnet ist. Erfindungsgemäß reicht die lokale Verdickung des Kunststoffs der Abdeckung bis an die Kameralinse heran, so dass die Innenseite der Abdeckung annähernd bündig mit der Kameralinse verbunden ist. Der Bereich zwischen der Außenseite der Abdeckung und der Kameralinse ist somit nahezu vollständig mit dem thermoplastischen Kunststoff der Abdeckung ausgefüllt.

In einer weiteren Ausführungsform umfasst das Fahrzeuganbauteil mit einem integrierten Kameramodul eine Abdeckung mit einer Außenseite und einer Innenseite, wobei die Abdeckung zumindest abschnittsweise aus einem transparenten thermoplastischen Kunststoff besteht, und ein Trägerteil, das an der Innenseite der Abdeckung angeordnet ist und in dem ein Kameramodul angeordnet ist, wobei die Abdeckung an der Innenseite eine lokale Verdickung und eine lokale Ausdünnung des transparenten thermoplastischen Kunststoffs aufweist, und wobei das Kameramodul zumindest eine Kameralinse umfasst und derartig in dem Trägerteil angeordnet ist, dass die zumindest eine Kameralinse der lokalen Verdickung und der lokalen Ausdünnung unmittelbar gegenüberliegend angeordnet ist.

Erfindungsgemäß reicht der transparente thermoplastische Kunststoff der Abdeckung im Bereich der lokalen Verdickung und der lokalen Ausdünnung bis an die Kameralinse heran, so dass die Innenseite der Abdeckung annähernd bündig mit der Kameralinse verbunden ist. Der Bereich zwischen der Außenseite der Abdeckung und der Kameralinse ist somit bei dem erfindungsgemäßen Anbauteil nahezu vollständig mit dem thermoplastischen Kunststoff der Abdeckung ausgefüllt.

In einer weiteren Ausführungsform umfasst das Fahrzeuganbauteil mit einem integrierten Kameramodul eine Abdeckung mit einer Außenseite und einer Innenseite, wobei die Abdeckung zumindest abschnittsweise aus einem transparenten thermoplastischen Kunststoff besteht, und ein Trägerteil, das an der Innenseite der Abdeckung angeordnet ist und in dem ein Kameramodul angeordnet ist, wobei die Abdeckung an der Innenseite eine lokale Ausdünnung des transparenten thermoplastischen Kunststoffs aufweist, und wobei das Kameramodul zumindest eine Kameralinse umfasst und derartig in dem Trägerteil angeordnet ist, dass die zumindest eine Kameralinse der lokalen Ausdünnung unmittelbar gegenüberliegend angeordnet ist. Erfindungsgemäß ist das Kameramodul derart angeordnet, dass der transparente thermoplastische Kunststoff der Abdeckung im Bereich der lokalen Ausdünnung bis an die Kameralinse heranreicht, so dass die Innenseite der Abdeckung annähernd bündig mit der Kameralinse verbunden ist. Der Bereich zwischen der Außenseite der Abdeckung und der Kameralinse ist somit bei dem erfindungsgemäßen Anbauteil nahezu vollständig mit dem thermoplastischen Kunststoff der Abdeckung ausgefüllt.

Die Außenseite der Abdeckung hat bevorzugt im Wesentlichen die Form einer planen Fläche, einer leicht gekrümmten Fläche oder einer gekrümmten Fläche.

Die Außenseite der Abdeckung stellt in Einbaulage die für einen Betrachter sichtbare Außenhaut dar. Es handelt sich somit bei dem erfindungsgemäßen Anbauteil nicht um ein zusätzliches Bauteil zur Anbringung an die Innenseite einer Fahrzeugscheibe wie es bei dem in der DE 10 2004 024 735 A1 beschriebenen Bauteil der Fall ist.

Alternativ ist die Kameralinse im Bereich der lokalen Verdickung und/oder lokalen Ausdünnung des transparenten thermoplastischen Kunststoffs der Abdeckung mit der Innenseite der Abdeckung stoffschlüssig verbunden. In diesem Fall ist der Bereich zwischen der Außenseite der Abdeckung und der Kameralinse vollständig mit dem thermoplastischen Kunststoff der Abdeckung ausgefüllt. Eine stoffschlüssige Verbindung zwischen der Innenseite der Abdeckung und der Kameralinse kann auch über das zusätzliche Einbringen einer transparenten Füllmasse erreicht werden. Die Füllmasse hat bevorzugt einen ähnlichen Brechungsindex wie die Abdeckung und die Kameralinse oder einen Brechungsindex, der zwischen dem Brechungsindex der Abdeckung und dem Brechungsindex der Kameralinse liegt.

Unter dem Begriff "Verdickung" ist hier und im Folgenden ein Anstieg der Wandstärke des thermoplastischen Kunststoffs der Abdeckung zu verstehen. Dabei ist diese Verdickung erfindungsgemäß nur an der Innenseite der Abdeckung ausgebildet, d.h. erfindungsgemäß ist dieser Anstieg der Wandstärke nur in Richtung der Kameralinse ausgebildet.

Unter dem Begriff "Ausdünnung" ist hier und im Folgenden eine Abnahme der Wandstärke des thermoplastischen Kunststoffs der Abdeckung zu verstehen. Dabei ist diese Ausdünnung erfindungsgemäß nur an der Innenseite der Abdeckung ausgebildet.

Das Merkmal "transparent" bezieht sich im Rahmen der Erfindung auf die Transparenz im für den Strahlungsempfänger relevanten Wellenlängenbereich. Für Strahlungsempfänger, d.h. Kameras, im sichtbaren Bereich und/oder im Infrarotbereich beträgt die Transmission für Wellenlängen von 200 nm bis 2000 nm bevorzugt mehr als 60 %, besonders bevorzugt > 70 % und insbesondere > 90 %.

Der Strahlungsempfänger umfasst bevorzugt Kameras für sichtbares Licht der Wellenlängen von 380 nm bis 780 nm und/oder infrarotes Licht der Wellenlängen von 780 nm bis 1300 nm.

In einer bevorzugten Ausführungsform entspricht der von der Kamera erfasste Wellenlängenbereich im Wesentlichen dem für das menschliche Auge sichtbaren Wellenlängenbereich, d.h. 380 nm bis 780 nm.

Das erfindungsgemäße Anbauteil ermöglicht beispielsweise nicht nur die Integration einer Fahrerassistenz- oder Unfallaufzeichnungskamera im sichtbaren Bereich, sondern auch die Integration einer Infrarot-Nachtsichtkamera, die z.B. zur Spur- und/oder Objekterkennung ausgelegt ist.

Die lokale Verdickung und/oder die lokale Ausdünnung kann jede beliebige den technischen Anforderungen genügende dreidimensionale Form haben. Insbesondere kann die lokale Verdickung und/oder die lokale Ausdünnung eine den Strahlengang optimierende und/oder optische Effekte hervorrufende Form haben.

Die Formgebung der lokalen Verdickung und/oder der lokalen Ausdünnung richtet sich insbesondere nach der Größe und Anzahl der Kameralinsen, deren Blickrichtung und dem für die Sicht der Kamera notwendigen (kegelförmigen) Öffnungswinkel.

Die Verdickung und/oder Ausdünnung kann beispielsweise die Form eines Quaders, eines Kegels, eines Keils, eines Zylinders oder eines Trapezprimas haben.

Beispielsweise kann der Querschnitt der Verdickung und/oder der Ausdünnung eine viereckige, bevorzugt rechteckige oder trapezförmige Form haben. Dies kann insbesondere der Fall sein, wenn in dem Kameramodul eine oder mehrere auf einer Ebene und auf einer Höhe nebeneinander angeordnete Kameralinsen derartig angeordnet sind, dass die Blickrichtung der Kameralinsen jeweils senkrecht zur Außenseite der Abdeckung ist.

Der Querschnitt der Verdickung und/oder der Ausdünnung kann beispielsweise auch eine im Wesentlichen dreieckige Form haben. Dies kann insbesondere der Fall sein, wenn in dem Kameramodul eine oder mehrere auf einer Ebene nebeneinander angeordnete Kameralinsen derartig nebeneinander angeordnet sind, dass der Winkel zwischen der Blickrichtung der Kameralinse und der Außenseite der Abdeckung kleiner als 90° ist, bevorzugt zwischen 85° und 30°, besonders bevorzugt zwischen 85° und 50°, ganz besonders bevorzugt zwischen 85° und 65° ist. Dies kann beispielsweise auch der Fall sein, wenn in dem Kameramodul eine oder mehrere auf einer Ebene nebeneinander angeordnete Kameralinsen derartig nebeneinander angeordnet sind, dass der Winkel zwischen der Blickrichtung der Kameralinse und der Außenseite der Abdeckung kleiner als 90° ist, bevorzugt zwischen 89° und 30°, besonders bevorzugt zwischen 89° und 65°, ganz besonders bevorzugt zwischen 89° und 85° ist.

Im Falle eines Kameramoduls mit mehreren nicht auf einer Ebene angeordneten Kameralinsen und/oder mehreren Kameralinsen, deren Blickrichtungen sich unterscheiden, ist bevorzugt die Verdickung und/oder die Ausdünnung des transparenten thermoplastischen Kunststoffs derartig ausgebildet, dass der transparente thermoplastische Kunststoff im Wesentlichen bündig mit den Kameralinsen abschließt.

Der transparente thermoplastische Kunststoff der Abdeckung ist im Bereich außerhalb der Verdickung und/oder Ausdünnung bevorzugt 1 mm bis 5 mm dick, besonders bevorzugt 2 mm bis 3 mm dick. Im Bereich der Verdickung ist der transparente thermoplastische Kunststoff der Abdeckung bevorzugt um maximal 1 mm bis 20 mm dicker als im Bereich außerhalb der Verdickung. Im Bereich der Ausdünnung ist der transparenten thermoplastische Kunststoff der Abdeckung bevorzugt maximal auf 1 mm ausgedünnt.

In einer Ausführungsform des erfindungsgemäßen Anbauteils weist die Abdeckung an der Innenseite eine Verdickung auf, wobei der transparente thermoplastische Kunststoff der Abdeckung in einem Bereich der Verdickung um maximal 1 mm bis 20 mm dicker als in einem Bereich außerhalb der Verdickung ist, und bevorzugt der transparente thermoplastische Kunststoff der Abdeckung im Bereich außerhalb der Verdickung 1 mm bis 5 mm dick, besonders bevorzugt 2 mm bis 3 mm dick ist.

Durch die Verdickung des transparenten thermoplastischen Kunststoffs der Abdeckung in Richtung der Kameralinse und/oder die Ausdünnung des transparenten thermoplastischen Kunststoffs der Abdeckung und die Anordnung des Kameramoduls derart, dass die Kameralinse dem Bereich der Verdickung und/oder Ausdünnung unmittelbar gegenüberliegt, wird der zwischen der Kameralinse und der Innenseite der Abdeckung gebildete Hohlraum verkleinert und somit die Gefahr eines Beschlagens durch Wasserdampf ebenfalls verkleinert, bevorzugt minimiert. Auf die Integration von mikroporöse Membranen, insbesondere Membranen aus expandiertem Polytetrafluorethylen (ePTFE), in das Kameramodul, um flüssiges Wasser aus dem Zwischenraum zwischen der Kameralinse und der Abdeckung fernzuhalten und zugleich ein Abdampfen von Wasserdampf aus dem Inneren zu ermöglichen, kann bei dem erfindungsgemäßen Anbauteil daher verzichtet werden. Dies gilt insbesondere für den Fall, dass die Verdickung und/oder die Ausdünnung mit der Kameralinse im Wesentlichen bündig abschließt, d.h. dass nahezu der gesamte Bereich zwischen der Außenseite der Abdeckung und der Kameralinse mit dem thermoplastischen Kunststoff der Abdeckung ausgefüllt ist. Die Möglichkeit des Verzichts auf mikroporösen Membranen führt unter anderem dazu, dass das erfindungsgemäße Anbauteil aus weniger Einzelkomponenten besteht als aus dem Stand der Technik bekannte Anbauteile, wodurch die Produktionskosten gesenkt werden können und sich der Zusammenbau vereinfacht.

Beim erfindungsgemäßen Fahrzeuganbauteil stellt der transparente thermoplastische Kunststoff der Abdeckung insbesondere nicht nur die für den Betrachter sichtbare Außenhaut des Anbauteils dar, sondern dient zugleich als Lichtleiter für die auf der Innenseite des Anbauteils befestigte Kamera. Beim erfindungsgemäßen Anbauteil reicht der Lichtleiter aufgrund der lokalen Verdickung und/oder lokalen Ausdünnung und der Anordnung des Kameramoduls derart, dass die Kameralinse unmittelbar gegenüberliegend zur lokalen Verdickung und/oder lokalen Ausdünnung angeordnet ist, näher an die Kameralinse heran als bei Anbauteilen nach dem Stand der Technik und schließt bevorzugt mit der Kameralinse im Wesentlichen bündig ab oder ist bevorzugt mit der Kameralinse stoffschlüssig verbunden. Dies wirkt sich vorteilhaft auf die optischen Eigenschaften des Kamerasystems aus.

Weiterer Vorteil des erfindungsgemäßen Anbauteils ist, dass das Gewicht der Abdeckung gegenüber einer Abdeckung, die aus Mineralglas gefertigt ist, deutlich verringert ist. Dies kommt daher, dass die Abdeckung zumindest teilweise aus transparentem thermoplastischem Kunststoff gefertigt ist.

In einer Ausführungsform ist die Blickrichtung der Kameralinse nicht senkrecht zur Außenhaut des Anbauteils ausgerichtet, sondern leicht nach unten und/oder leicht zur Seite, um beispielsweise Teile der Straße abzubilden. Der Winkel zwischen der Blickrichtung der Kameralinse und der Außenseite der Abdeckung ist in dieser Ausführungsform kleiner als 90°, bevorzugt zwischen 85° und 30°, besonders bevorzugt zwischen 85° und 50°, ganz besonders bevorzugt zwischen 85° und 65°. Der Winkel zwischen der Blickrichtung der Kameralinse und der Außenseite der Abdeckung ist in einer weiteren Ausführungsform kleiner als 90°, bevorzugt zwischen 89° und 30°, besonders bevorzugt zwischen 89° und 65°, ganz besonders bevorzugt zwischen 89° und 85°. Eine entsprechende lokale Verdickung und/oder lokale Ausdünnung des transparenten thermoplastischen Materials der Abdeckung im Bereich, der der Kameralinse unmittelbar gegenüberliegt, gewährleistet auch in diesen Ausführungsformen eine Reduktion des Zwischenraums zwischen der Innenseite der Abdeckung und der Kameralinse und somit insbesondere eine im Wesentlichen bündige oder stoffschlüssige Verbindung der Kameralinse mit der Abdeckung.

In den transparenten thermoplastischen Kunststoff der Abdeckung können an der Innenseite Oberflächenstrukturen eingebracht sein, die die optischen Eigenschaften der Kameralinse bzw. den Lichteinfall auf selbiger optimieren können, wie z.B. Krümmungen, Prismen oder Fresneloptiken. Dies stellt neben einer Gewichtsreduzierung einen weiteren Vorteil gegenüber der Verwendung von Mineralglas dar, da in Mineralglas die Einbringung von solchen Oberflächenstrukturen nicht möglich ist.

Der transparente thermoplastische Kunststoff der Abdeckung enthält bevorzugt zumindest Polyethylen (PE), Polycarbonate (PC), Polypropylen (PP), Polystyrol, Polybutadien, Polynitrile, Polyester, insbesondere Polyethylenterephthalat (PET), Polyurethane (PU), Polymethylmethacylate (PMMA), Polyacrylate, Polyamide (PA), Acrylnitril-Butadien-StyrolCopolymerisate (ABS), Styrol-Acrylnitril-Copolymerisate (SAN), Acrylester-Styrol-Acrylnitril-Copolymerisate (ASA), Acrylnitril-Butadien-Styrol-Polycarbonat-Gemische (ABS/PC) und/oder ihre Copolymerisate, Cokondensate und/oder Gemische.

Besonders bevorzugt enthält der transparente thermoplastische Kunststoff der Abdeckung Polycarbonate (PC), Polymethylmethacrylat (PMMA), Styrol-Acrylnitril (SAN), und/oder Copolymere oder Gemische davon. Diese Polymere erlauben eine Verarbeitung zu hochglänzenden, je nach Anwendungszweck teilweise glasähnlichen Oberflächen.

Das Anbauteil, insbesondere die Abdeckung, ist bevorzugt mit einer Schutzbeschichtung (Hardcoat), besonders bevorzugt mit thermisch oder UV-härtenden Lacken, besonders bevorzugt Polysiloxanen, Polyacrylaten, Polymethacrylaten, Polyurethanen und/oder Gemischen oder Copolymeren davon versehen. Der Hardcoat verbessert die Beständigkeit gegenüber mechanischen Beschädigungen, Witterungseinflüssen, Temperaturschwankungen, UV-Strahlung und/oder aggressiven Chemikalien aus der Luft oder dem Spritzwasser. Optional kann der Hardcoat auch dekorative Funktionen wahrnehmen.

Die Schutzbeschichtung weist bevorzugt eine Dicke von 1 µm (Mikrometer) bis 50 µm, besonders bevorzugt von 2 µm bis 25 µm auf.

Als Trägerteil eignet sich jedes zur Integration eines Kameramoduls geeignete Trägerteil. Das Trägerteil ist derart ausgebildet, dass das Kameramodul so aufgenommen werden kann, dass die Kameralinse dem Bereich der Verdickung und/oder der Ausdünnung der Abdeckung unmittelbar gegenüberliegend angeordnet ist.

Das Trägerteil kann beispielsweise wie das aus dem Stand der Technik bekannte Trägerteil umfassend einen Kameraträger und Ringdichtungen ausgebildet sein (siehe auch Figur 1).

In einer bevorzugten Ausführungsform ist das Trägerteil aus thermoplastischen Kunststoff gefertigt. Es enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyester, Polyaminde, Polyethylentherephthalat (PET), bevorzugt Acylnitril-Butadien-Styrol (ABS), Acrylester-Styrol-Acrylnitril (ASA), Acrylnitril-Butadien-Styrol-Polycarbonat (ABS/PC) und/oder Copolymere oder Gemische davon oder besteht daraus.

Bevorzugt enthält das aus thermoplastischen Kunststoff gefertigte Trägerteil anorganische oder organische Füllstoffe, besonders bevorzugt SiO₂, Al₂O₃, TiO₂, Tonmineralien, Silikate, Zeolithe, Glasfasern, Kohlenstofffasern, Glaskugeln, organische Fasern und/oder Gemische davon. Diese Füllstoffe können die Stabilität des Trägerteils erhöhen. Zudem können die Füllstoffe den Anteil an polymeren Materialien verringern und so die Herstellungskosten des Bauteils vermindern.

Der thermoplastische Kunststoff, aus dem das Trägerteil für das Kameramodul in einer Ausführungsform besteht, ist bevorzugt opak, besonders bevorzugt farbig, insbesondere von einer dunklen Farbe, ganz besonders bevorzugt schwarz.

In einer Ausführungsform ist der thermoplastische Kunststoff, aus dem das Trägerteil besteht, transparent.

Das aus thermoplastischem Kunststoff gefertigte Trägerteil ist bevorzugt 1 mm bis 100 mm dick, besonders bevorzugt 2 mm bis 50 mm, ganz besonders bevorzugt 2 mm bis 10 mm, insbesondere 2 mm bis 3 mm dick.

Die Ausführungsform, in der das Trägerteil aus thermoplastischen Kunststoff als Spritzgussteil gefertigt ist, bietet den Vorteil einer vereinfachten Montage des Kameramoduls in das Trägerteil, da sich in diesem Fall die Aussparung für das Kameramodul, Befestigungselemente wie Dome, Klipsöffnungen o.ä. und Aussparungen für mit dem Kameramodul verbundene Kabel direkt in das als Spritzgussteil ausgebildete Trägerteil einbringen lassen. Bevorzugt weist das Kameramodul ein gegenstückiges Aufnahmekonzept auf, so dass beispielsweise das Kameramodul in lediglich einem Schritt auf das Trägerteil geklipst werden kann und ein Kleben der Befestigungselemente nicht notwendig ist. Bei einer aus Mineralglas gefertigten Abdeckung müssen hingegen Innenschale und Befestigungselemente oftmals zusätzlich geklebt werden.

In einer Ausführungsform ist die Abdeckung als Spritzgussteil aus transparenten thermoplastischen Kunststoff ausgebildet. Diese Abdeckung kann dann mit einem oben beschriebenen Trägerteil für die Integration des Kameramoduls verbunden werden.

In einer bevorzugten Ausführungsform sind die Abdeckung und das Trägerteil als 2-Komponenten Spritzgussteil ausgebildet.

In einer alternativen Ausführungsform ist die Abdeckung als 1-Komponenten Spritzgussteil mit hinterspritzter polymerer Folie ausgebildet. Die hinterspritzte Folie ist bevorzugt opak, besonders bevorzugt farbig, insbesondere dunkelfarbig, ganz besonders bevorzugt ist sie schwarz. An die Folie kann dann ein Trägerteil für die Integration des Kameramoduls angebracht werden, d.h. das Trägerteil wird mit der Folie verbunden.

Die polymere Folie enthält bevorzugt Polycarbonate (PC), Polymethylmethacrylat (PMMA) Polyethylenterephthalat (PET), Polybutylenterephthalat (PBT), Polycarbonat-Polybutylenterephthalat (PBT/PC), Styrol-Acrylnitril (SAN) und/oder Copolymere oder Gemische davon.

In einer Ausführungsform ist die Folie farbig und/oder mit einem oder mehreren Mustern ausgebildet, so dass sie einen optischen Effekt bewirken kann. Es besteht beispielsweise die Möglichkeit über eine derartige Folie Dekorelemente in das Anbauteil einzubringen.

Das erfindungsgemäße Anbauteil ist eine Frontscheibe, eine Heckscheibe, eine Seitenscheibe oder eine Dachscheibe, eine Leiste, insbesondere eine Seitenleiste, eine Frontleiste, eine Rückleiste oder eine Zierleiste, ein Stoßfänger, ein Schweller, ein Spoiler, eine Lampenabdeckung oder eine Blende, insbesondere eine Säulenblende, besonders bevorzugt eine B-Säulenblende.

Die Erfindung umfasst des Weiteren ein Verfahren zur Herstellung eines erfindungsgemäßen Anbauteils mit integriertem Kameramodul.

Das Verfahren umfasst als Schritte mindestens die Bereitstellung einer Abdeckung, die zumindest teilweise aus einem transparenten thermoplastischen Kunststoff besteht und die an ihrer Innenseite eine lokale Verdickung und/oder eine lokale Ausdünnung des transparenten thermoplastischen Kunststoffs aufweist, die Bereitstellung eines Trägerteils für ein Kameramodul, das mindestens eine Kameralinse umfasst, das Verbinden der Abdeckung mit dem Trägerteil und die Aufnahme des Kameramoduls in das Trägerteil, wobei das Kameramodul derart in das Trägerteil aufgenommen wird, dass die Kameralinse des Kameramoduls der lokalen Verdickung und/oder der lokalen Ausdünnung des transparenten thermoplastischen Kunststoffs der Abdeckung unmittelbar gegenüberliegend angeordnet ist.

Optional kann das Verfahren als weiteren Schritt das Aufbringen einer Schutzbeschichtung bevorzugt mittels Flutbeschichten umfassen. Die Schutzbeschichtung kann auf die Abdeckung und/oder das Trägerteil aufgebracht werden. Alternativ kann die Schutzbeschichtung auch auf das Anbauteil mit oder ohne Kameramodul aufgebracht werden.

In einer Ausführungsform des erfindungsgemäßen Verfahrens reicht der transparente thermoplastische Kunststoff der zumindest teilweise aus transparenten thermoplastischen Kunststoff bestehenden Abdeckung im Bereich der lokalen Verdickung und/oder lokalen Ausdünnung bis an die Kameralinse heran und schließt bevorzugt mit dieser im Wesentlichen bündig ab.

In einer Ausführungsform des erfindungsgemäßen Verfahrens werden die Abdeckung und das daran angebundene Trägerteil als 2-Komponenten-Spritzgussteil im 2-Komponenten-Spritzgussverfahren oder im 2-Komponenten-Spritzprägeverfahren mit Wendeplattentechnologie gefertigt. Diese Verfahren ermöglichen die nahezu abfallfreie Herstellung, weil ein nachträgliches Beschneiden des Werkstücks nicht notwendig ist. Ebenso können komplexe Strukturen direkt hergestellt werden.

Dabei kann entweder zuerst die Abdeckung als Spritzgussteil gefertigt und dann das Trägerteil an dieses gespritzt werden oder es kann alternativ zuerst das Trägerteil gefertigt und dann die Abdeckung an dieses gespritzt werden.

Optional umfasst das Verfahren "optical bonding" als weiteren Prozessschritt, um einen stoffschlüssigen Verbund zwischen der Innenseite der Abdeckung und der Kameralinse zu erzielen. Bei diesem Prozessschritt wird eine transparente Füllmasse mit bevorzugt einem ähnlichen Brechungsindex wie die Abdeckung und die Kameralinse oder einem Brechungsindex, der dazwischen liegt, zwischen die Kameralinse und die Abdeckung eingefügt.

In einem alternativen Verfahren kann die Abdeckung, die eine lokale Verdickung und/oder eine lokale Ausdünnung aufweist, als 1-Komponenten Spritzgussteil mit hinterspritzter Folie gefertigt werden. Bei diesem Verfahren wird zunächst eine Folie bzw. ein Folienzuschnitt in diejenige Seite der Abdeckungs-Spritzgusskavität eingebracht, welche später die Innenseite der Abdeckung darstellt, wobei die Folie bevorzugt opak, besonders bevorzugt farbig, insbesondere dunkelfarbig, ganz besonders bevorzugt schwarz ist. Die Folie bzw. der Folienzuschnitt weist bevorzugt einen lokalen Durchbruch in dem Bereich auf, an dem sich später die Kameralinse befindet. Der Folienzuschnitt wird dann mit dem transparenten Material hinterspritzt, d.h. die Spritzgusskavität wird gefüllt während die Folie an ihrem Platz verbleibt. Der Folienzuschnitt kann entsprechend der Werkzeugkontur vorgeformt sein, um eine bessere Passform und ggf. Ausformung beim Hinterspritzen zu gewährleisten. An diese Abdeckung, genauer gesagt, an den Folienzuschnitt, kann dann ein Trägerteil zur Integration eines Kameramoduls angebracht werden, wobei das Kameramodul derartig in dem Trägerteil angeordnet wird, dass die Kameralinse der lokalen Verdickung und/oder der lokalen Ausdünnung unmittelbar gegenüberliegend angeordnet ist.

In einer Ausführungsform ist die Folie farbig und/oder mit einem oder mehreren Mustern ausgebildet, so dass sie einen optischen Effekt bewirken kann. Beispielsweise können über eine solche Folie Dekorelemente in das Anbauteil eingebracht werden.

Bei der Fertigung der Abdeckung als Spritzgussteil oder als Spritzgussteil mit hinterspritzter Folie kann die Spritzgussmasse beispielsweise über einen seitlichen Fächeranguss und/oder seitliche Anspritzpunkte und/oder über einen Anspritzpunkt im Bereich der lokalen Verdickung und/oder der lokalen Ausdünnung eingebracht werden.

In einer bevorzugten Ausführungsform wird die Spritzgussmasse bei der Fertigung der Abdeckung als Spritzgussteil oder als Spritzgussteil mit hinterspritzter Folie über einen Anspritzpunkt im Bereich der lokalen Verdickung und/oder der lokalen Ausdünnung und optional zusätzlich über einen seitlichen Fächeranguss und/oder seitliche Anspritzpunkte eingebracht. Durch diese Art der Einbringung kann nach dem Ausformen der Spritzgussmasse in dem Bereich der lokalen Verdickung und/oder der lokalen Ausdünnung ein entsprechender Nachdruck angelegt und damit ein Einfallen der transparenten Spritzgussmasse beim Abkühlen der transparenten Spritzgussmasse im Spritzgusswerkzeug verhindert bzw. minimiert werden. Auf diese Weise kann eine Verschlechterung der Reflexionsoptik auf der Blendenaußenseite durch Einfallstellen vermieden werden. Der Nachdruck ist abhängig vom vorher benötigten Fülldruck und kann beispielsweise im Bereich von 300 bis 500 bar liegen. Der Anspritzpunkt im Bereich der lokalen Verdickung und/oder lokalen Ausdünnung liegt bevorzugt nicht in dem Bereich, der nach Integration des Kameramoduls der Kameralinse unmittelbar gegenüberliegt, damit die Optik des Kameramoduls nicht durch den Anspritzpunkt beeinflusst wird. Der Durchmesser der Düse, mit der die Spritzgussmasse im Bereich der lokalen Verdickung und/oder lokalen Ausdünnung eingebracht werden kann, beträgt zwischen 1 mm und 10 mm, bevorzugt zwischen 2 mm und 5 mm.

Die Erfindung umfasst des Weiteren die Verwendung des Anbauteils zur Integration eines Kameramoduls in Fahrzeugen, bevorzugt Kraftfahrzeugen, Lastkraftwagen, Bussen, insbesondere zur Integration eines Kameramoduls in einer Scheibe, insbesondere einer Frontscheibe, einer Heckscheibe, einer Seitenscheibe oder einer Dachscheibe, in einer Leiste, insbesondere einer Seitenleiste, einer Frontleiste, einer Rückleiste oder einer Zierleiste, in einem Stoßfänger, in einem Schweller, in einem Spoiler, in einer Lampenabdeckung oder in einer Blende, insbesondere einer Säulenblende, besonders bevorzugt in einer B-Säulenblende.

Im Folgenden wird die Erfindung anhand von Zeichnungen näher erläutert. Die Zeichnungen sind rein schematische Darstellungen und weder winkel-, noch größen- noch maßstabsgetreu. Sie schränken die Erfindung in keiner Weise ein.

Es zeigen:
Figur 1 einen Querschnitt eines Fahrzeuganbauteils mit integriertem Kameramodul nach dem Stand der Technik,
Figur 2 einen Querschnitt einer Ausführungsform des erfindungsgemäßen Anbauteils,
Figur 3 einen Querschnitt einer Ausführungsform des erfindungsgemäßen Anbauteils,
Figur 4 einen Querschnitt einer Ausführungsform des erfindungsgemäßen Anbauteils,
Figur 5 einen Querschnitt einer Ausführungsform des erfindungsgemäßen Anbauteils,
Figur 6 einen Querschnitt einer Ausführungsform des erfindungsgemäßen Anbauteils,
Figur 7 einen Querschnitt einer Ausführungsform des erfindungsgemäßen Anbauteils,
Figur 8 einen Querschnitt einer Ausführungsform des erfindungsgemäßen Anbauteils, wobei die Düse zum Anspritzen der Abdeckung schematisch dargestellt ist,
Figur 9 einen Querschnitt einer Ausführungsform des erfindungsgemäßen Anbauteils,
Figur 10 einen Querschnitt einer Ausführungsform des erfindungsgemäßen Anbauteils,
Figur 11 einen Querschnitt einer Ausführungsform des erfindungsgemäßen Anbauteils,
Figur 12 ein Fließschema eines Verfahrens zur Herstellung eines erfindungsgemäßen Anbauteils,
Figur 13 ein Fließschema eines alternativen Verfahrens zur Herstellung eines erfindungsgemäßen Anbauteils,
Figur 14 ein Fließschema eines alternativen Verfahrens zur Herstellung eines erfindungsgemäßen Anbauteils.

Figur 1 zeigt einen Querschnitt eines Fahrzeuganbauteils (21) mit einem integrierten Kameramodul (3) nach dem Stand der Technik. Das Fahrzeuganbauteil (21) nach dem Stand der Technik umfasst eine Abdeckung (20) aus Glas, die mit einer schwarzen Innenschale (2) verbunden ist. An diese Innenschale (2) ist ein Kameraträger (4) mit einer Ringdichtung (6) angebracht. In den Kameraträger (4) ist ein Kameramodul (3), das eine Kameralinse (7) umfasst aufgenommen. Die Kameralinse (7) zeigt in Richtung der Innenseite (II) der Abdeckung (20).

In der Figur 1 sind die Lichtreflexion an der Außenhaut (I) der Abdeckung (20) und die Reflexion an der Innenhaut (II) der Abdeckung (20) bzw. der Grenzfläche von Abdeckung (20) und Kameraträger (4) gezeigt.

Trifft Licht aus einem beliebigen Winkel auf die Außenhaut (I) der Abdeckung (20), so wird zunächst ein beträchtlicher Teil des Lichts reflektiert; ein Teil des Lichts wird jedoch an der Oberfläche gebrochen und abgelenkt und tritt in das optisch dichtere Medium Glas ein. Je nachdem in welchem Bereich des Anbauteils (21) dies passiert, treten zwei verschiedene Effekte ein: im Bereich der Kameraaussparung hat die Innenhaut (II) der Abdeckung (20) üblicherweise Kontakt mit Luft, dem im Vergleich zu Glas optisch dünneren Medium, und so kommt es zu einer teilweisen Reflexion an dieser Grenzfläche. Ein erheblicher Teil des Lichts wird erneut reflektiert und erreicht nach erneuter Teilreflexion an der Außenhaut (I) das Auge des Betrachters (Strahlengang A). Im Bereich außerhalb des Kamerabereichs ist die Abdeckung (20) über die Innenhaut (II) jedoch fest mit der schwarzen Innenschale (2) verbunden. Hier findet keine bzw. kaum noch Reflexion statt, da das Licht hier größtenteils von dem schwarzen Trägermaterial absorbiert wird (Strahlengang B).

Um das Kameramodul (3) bei Anbauteilen (21) nach Stand der Technik möglichst unsichtbar zu gestalten, ist der zur Innenseite (II) der Abdeckung (20) zeigende Teil des Kameraträgers (4) schwarz beflockt. Diese Beflockung (5) schluckt das durch die transparente Abdeckung (20) eingedrungene Licht (das nicht reflektierte Licht), welches dann nicht wieder austreten kann. Der Kamerabereich hebt sich für den Betrachter aufgrund des teilreflektierten Lichts an der Grenzfläche Innenhaut (II) zu Luft jedoch immer mehr oder weniger deutlich von dem mit der Innenschale (2) schwarz hinterlegten Bereich ab. Das Material der Abdeckung (20) reicht nicht bis an die Kameralinse (7) heran, es besteht ein Hohlraum mit Luft (8) zwischen der Innenseite (II) der Abdeckung (20) und der Kameralinse (7), in den Wasser eindringen und kondensieren kann, wodurch die optischen Eigenschaften des Kameramoduls (3) beeinträchtigt werden können.

Figur 2 zeigt einen Querschnitt einer Ausführungsform des erfindungsgemäßen Anbauteils (11), umfassend eine Abdeckung (1) aus einem transparenten thermoplastischen Kunststoff (1.1), ein damit verbundenes Trägerteil (12) aus einem thermoplastischen Kunststoff und ein in das Trägerteil (12) aufgenommenes Kameramodul (3) mit einer Linse (7), die in Richtung der Innenseite (II) der Abdeckung (1) angeordnet ist. Der Durchmesser der Kameralinse (7) ist beispielsweise 11 mm. Der Winkel zwischen der Blickrichtung der Kameralinse (7) und der Außenseite (I) der Abdeckung (1) ist in der gezeigten Ausführungsform von 90° verschieden, beispielsweise 65°. Der Winkel kann aber auch einen anderen Wert haben, beispielsweise 85° sein. Die Abdeckung (1) hat an ihrer Innenseite (II) in Richtung der Kameralinse (7) eine lokale Verdickung (9) des transparenten thermoplastischen Kunststoffs (1.1) und reicht somit bis an die Kameralinse (7) heran. Die Kameralinse (7) ist der lokalen Verdickung (9) unmittelbar gegenüberliegend angeordnet. Dies führt dazu, dass die Abdeckung (1) im Wesentlichen bündig mit der Kameralinse (7) verbunden ist und der zwischen Kameralinse (7) und der Innenseite (II) der Abdeckung (1) gebildete Hohlraum mit Luft (8) minimiert ist. Auf diese Weise kann das Beschlagen der Linse (7) oder der Innenseite (II) der Abdeckung (1) durch Kondensation von Wasserdampf minimiert werden. Der thermoplastische Kunststoff (1.1) ist im Bereich außerhalb der Verdickung (9) beispielsweise 3 mm dick und im Bereich der Verdickung (9) um maximal 4 mm dicker als außerhalb des Bereichs der Verdickung (9).

Bei Fertigung des Trägerteils (12) aus einem schwarzen thermoplastischen Kunststoff ist zudem in dieser Ausführungsform im Vergleich zu dem in Figur 1 dargestellten Anbauteil (21) nach dem Stand der Technik der Querschnitt der Innenhaut (II), welche nicht direkt mit Schwarzmaterial hinterspritzt ist, reduziert. Die Fläche der Innenhaut (II), die nicht hinterspritzt ist, entspricht in dieser Ausführungsform der Fläche der Kameralinse (7). Auf diese Weise können die optischen Eigenschaften des Anbauteils (11) verbessert werden, auch ist das Kameramodul (3) von außen weniger sichtbar.

Die Abdeckung (1) und das daran angebundene Trägerteil (12) des in Figur 2 dargestellten Anbauteils (11) sind beispielsweise als 2-Komponenten Spritzgussteil gefertigt.

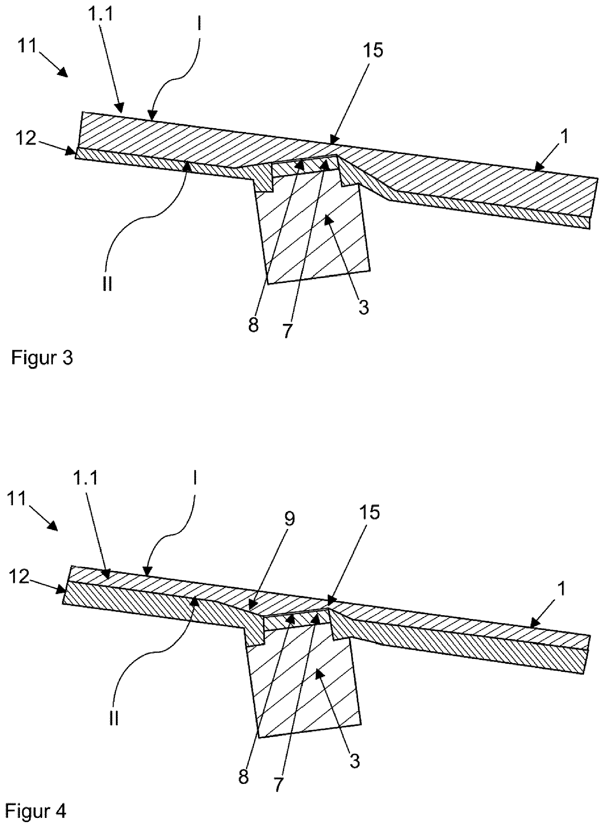

Figur 3 zeigt einen Querschnitt einer weiteren Ausführungsform des erfindungsgemäßen Anbauteils (11), umfassend eine Abdeckung (1) aus einem transparenten thermoplastischen Kunststoff (1.1), ein damit verbundenes Trägerteil (12) aus einem thermoplastischen Kunststoff und ein in das Trägerteil (12) aufgenommenes Kameramodul (3) mit einer Linse (7), die in Richtung der Innenseite (II) der Abdeckung (1) angeordnet ist. Der Durchmesser der Kameralinse (7) ist beispielsweise 11 mm. Der Winkel zwischen der Blickrichtung der Kameralinse (7) und der Außenseite (I) der Abdeckung (1) ist in der gezeigten Ausführungsform von 90° verschieden. Die Abdeckung (1) hat an ihrer Innenseite (II) eine lokale Ausdünnung (15) des transparenten thermoplastischen Kunststoffs (1.1). Die Kameralinse (7) ist einem Bereich der Ausdünnung (15) unmittelbar gegenüberliegend angeordnet. Dies führt dazu, dass die Abdeckung (1) im Wesentlichen bündig mit der Kameralinse (7) verbunden ist und der zwischen Kameralinse (7) und der Innenseite (II) der Abdeckung (1) gebildete Hohlraum mit Luft (8) minimiert ist. Auf diese Weise kann das Beschlagen der Linse (7) oder der Innenseite (II) der Abdeckung (1) durch Kondensation von Wasserdampf minimiert werden. Der thermoplastische Kunststoff (1.1) ist im Bereich außerhalb der Ausdünnung (15) beispielsweise 5 mm dick und im Bereich der Ausdünnung (15) um maximal 3 mm dünner als außerhalb des Bereichs der Ausdünnung (15).

Bei Fertigung des Trägerteils (12) aus einem schwarzen thermoplastischen Kunststoff ist zudem in dieser Ausführungsform im Vergleich zu dem in Figur 1 dargestellten Anbauteil (21) nach dem Stand der Technik der Querschnitt der Innenhaut (II), welche nicht direkt mit Schwarzmaterial hinterspritzt ist, reduziert. Die Fläche der Innenhaut (II), die nicht hinterspritzt ist, entspricht in dieser Ausführungsform der Fläche der Kameralinse (7). Auf diese Weise können die optischen Eigenschaften des Anbauteils (11) verbessert werden, auch ist das Kameramodul (3) von außen weniger sichtbar.

Die Abdeckung (1) und das daran angebundene Trägerteil (12) des in Figur 3 dargestellten Anbauteils (11) sind beispielsweise als 2-Komponenten Spritzgussteil gefertigt.

Figur 4 zeigt einen Querschnitt einer weiteren Ausführungsform des erfindungsgemäßen Anbauteils (11), umfassend eine Abdeckung (1) aus einem transparenten thermoplastischen Kunststoff (1.1), ein damit verbundenes Trägerteil (12) aus einem thermoplastischen Kunststoff und ein in das Trägerteil (12) aufgenommenes Kameramodul (3) mit einer Linse (7), die in Richtung der Innenseite (II) der Abdeckung (1) angeordnet ist. Der Durchmesser der Kameralinse (7) ist beispielsweise 11 mm. Der Winkel zwischen der Blickrichtung der Kameralinse (7) und der Außenseite (I) der Abdeckung (1) ist in der gezeigten Ausführungsform von 90° verschieden. Die Abdeckung (1) hat an ihrer Innenseite (II) eine lokale Verdickung (9) und eine lokale Ausdünnung (15) des transparenten thermoplastischen Kunststoffs (1.1). Die Kameralinse (7) ist dem Bereich der Verdickung (9) und Ausdünnung (15) unmittelbar gegenüberliegend angeordnet. Dies führt dazu, dass die Abdeckung (1) im Wesentlichen bündig mit der Kameralinse (7) verbunden ist und der zwischen Kameralinse (7) und der Innenseite (II) der Abdeckung (1) gebildete Hohlraum mit Luft (8) minimiert ist. Auf diese Weise kann das Beschlagen der Linse (7) oder der Innenseite (II) der Abdeckung (1) durch Kondensation von Wasserdampf minimiert werden. Der thermoplastische Kunststoff (1.1) ist im Bereich außerhalb der Verdickung (9) und außerhalb der Ausdünnung (15) beispielsweise 5 mm dick und im Bereich der Verdickung (9) um maximal 3 mm dicker und im Bereich der Ausdünnung (15) um maximal 3 mm dünner als außerhalb des Bereichs der Verdickung (9) und der Ausdünnung (15).

Bei Fertigung des Trägerteils (12) aus einem schwarzen thermoplastischen Kunststoff ist zudem in dieser Ausführungsform im Vergleich zu dem in Figur 1 dargestellten Anbauteil (21) nach dem Stand der Technik der Querschnitt der Innenhaut (II), welche nicht direkt mit Schwarzmaterial hinterspritzt ist, reduziert. Die Fläche der Innenhaut (II), die nicht hinterspritzt ist, entspricht in dieser Ausführungsform der Fläche der Kameralinse (7). Auf diese Weise können die optischen Eigenschaften des Anbauteils (11) verbessert werden, auch ist das Kameramodul (3) von außen weniger sichtbar.

Die Abdeckung (1) und das daran angebundene Trägerteil (12) des in Figur 4 dargestellten Anbauteils (11) sind beispielsweise als 2-Komponenten Spritzgussteil gefertigt.

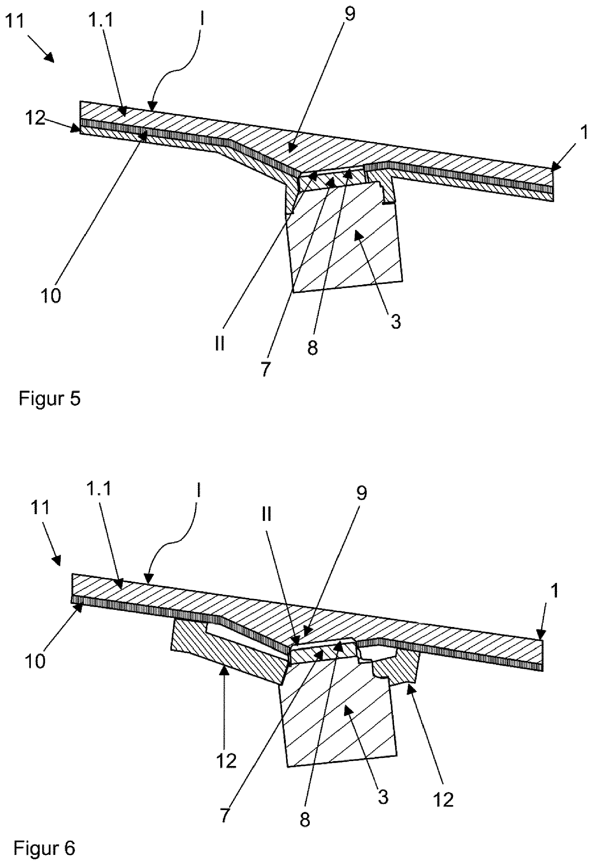

Figur 5 zeigt einen Querschnitt einer alternativen Ausführungsform eines erfindungsgemäßen Anbauteils (11), umfassend eine Abdeckung (1) aus einer mit einem transparenten thermoplastischen Kunststoff (1.1) hinterspritzten Folie (10), ein mit der Folie (10) verbundenes Trägerteil (12) aus einem thermoplastischen Kunststoff und ein in das Trägerteil (12) aufgenommenes Kameramodul (3) mit einer Linse (7), die in Richtung der Innenseite (II) des transparenten thermoplastischen Kunststoffs (1.1) angeordnet ist. Der Durchmesser der Kameralinse (7) ist beispielsweise 11 mm. Der Winkel zwischen der Blickrichtung der Kameralinse (7) und der Außenseite (I) der Abdeckung (1) ist in der gezeigten Ausführungsform von 90° verschieden. Die hinterspritzte Folie (10) weist in dem Bereich, in dem im Anbauteil (11) die Linse (7) angeordnet ist, eine Aussparung auf. Der transparente thermoplastische Kunststoff (1.1) der Abdeckung (1) hat an seiner Innenseite (II) in Richtung der Kameralinse (7) eine lokale Verdickung (9) und reicht somit bis an die Kameralinse (7) heran. Die Kameralinse (7) ist der lokalen Verdickung (9) unmittelbar gegenüberliegend angeordnet. Dies führt dazu, dass die Abdeckung (1) im Wesentlichen bündig mit der Kameralinse (7) verbunden ist und der zwischen Kameralinse (7) und der Innenseite (II) des transparenten thermoplastischen Kunststoffs (1.1) der Abdeckung (1) gebildete Hohlraum mit Luft (8) ist minimiert. Auf diese Weise kann das Beschlagen der Linse (7) oder der Innenseite (II) des transparenten thermoplastischen Kunststoffs (1.1) der Abdeckung (1) durch Kondensation von Wasserdampf minimiert werden. Der thermoplastische Kunststoff (1.1) ist im Bereich außerhalb der Verdickung (9) beispielsweise 3 mm dick und im Bereich der Verdickung (9) um maximal 4 mm dicker als außerhalb des Bereichs der Verdickung (9).

Bei dieser Ausführungsform ist bei Einsatz einer schwarzen Folie als hinterspritzte Folie (10) im Vergleich zu dem in Figur 1 dargestellten Anbauteil (21) aus dem Stand der Technik der Querschnitt derjenigen Innenseite (II) der Abdeckung (1), welche nicht direkt mit einem schwarzen Material verbunden ist, reduziert. Die Fläche der Innenseite (II) der Abdeckung (1), die nicht mit einem schwarzen Material verbunden ist, entspricht in dieser Ausführungsform der Fläche der Kameralinse (7). Auf diese Weise können die optischen Eigenschaften des Anbauteils (11) verbessert werden, auch ist das Kameramodul (3) von außen weniger sichtbar.

Diese Ausführungsform bietet bei Einsatz einer farbigen und/oder mit einem oder mehreren Mustern versehenen Folie die Möglichkeit über die Folie Dekorelemente in das Anbauteil einzubringen.

Figur 6 zeigt einen Querschnitt einer alternativen Ausführungsform eines erfindungsgemäßen Anbauteils (11), umfassend eine Abdeckung (1) aus einer mit einem transparenten thermoplastischen Kunststoff (1.1) hinterspritzten Folie (10), ein mit der Folie (10) verbundenes Trägerteil (12), und ein in das Trägerteil (12) aufgenommenes Kameramodul (3) mit einer Linse (7), die in Richtung der Innenseite (II) des transparenten thermoplastischen Kunststoffs (1.1) der Abdeckung (1) angeordnet ist. Der Durchmesser der Kameralinse (7) ist beispielsweise 11 mm. Der Winkel zwischen der Blickrichtung der Kameralinse (7) und der Außenseite (I) der Abdeckung (1) ist in der gezeigten Ausführungsform von 90° verschieden. Die hinterspritzte Folie (10) weist in dem Bereich, in dem im Anbauteil (11) die Linse (7) angeordnet ist, eine Aussparung auf. Der transparente thermoplastische Kunststoff (1.1) der Abdeckung (1) weist an seiner Innenseite (II) in Richtung der Kameralinse (7) eine lokale Verdickung (9) auf und reicht somit bis an die Kameralinse (7) heran. Dies führt dazu, dass die Abdeckung (1) im Wesentlichen bündig mit der Kameralinse (7) verbunden ist und der zwischen Kameralinse (7) und der Innenseite (II) des transparenten thermoplastischen Kunststoffs (1.1) der Abdeckung (1) gebildete Hohlraum mit Luft (8) wird minimiert. Auf diese Weise kann das Beschlagen der Linse (7) oder der Innenseite (II) des transparenten thermoplastischen Kunststoffs (1.1) der Abdeckung (1) durch Kondensation von Wasserdampf minimiert werden. Der thermoplastische Kunststoff (1.1) ist im Bereich außerhalb der Verdickung (9) beispielsweise 3 mm dick und im Bereich der Verdickung (9) um maximal 4 mm dicker als außerhalb des Bereichs der Verdickung (9).

Bei dieser Ausführungsform ist bei Einsatz einer schwarzen Folie als hinterspritzte Folie (10) im Vergleich zu dem in Figur 1 dargestellten Anbauteil (21) aus dem Stand der Technik der Querschnitt derjenigen Innenseite (II) der Abdeckung (1), welche nicht mit direkt mit einem schwarzen Material verbunden ist, reduziert. Die Fläche der Innenseite (II) der Abdeckung (1), die nicht mit einem schwarzen Material verbunden ist, entspricht in dieser Ausführungsform der Fläche der Kameralinse (7). Auf diese Weise können die optischen Eigenschaften des Anbauteils (11) verbessert werden, auch ist das Kameramodul (3) von außen weniger sichtbar.

Die in Figur 6 gezeigte Ausführungsform unterscheidet sich von der in der Figur 5 gezeigten nur hinsichtlich der Form des Trägerteils (12).

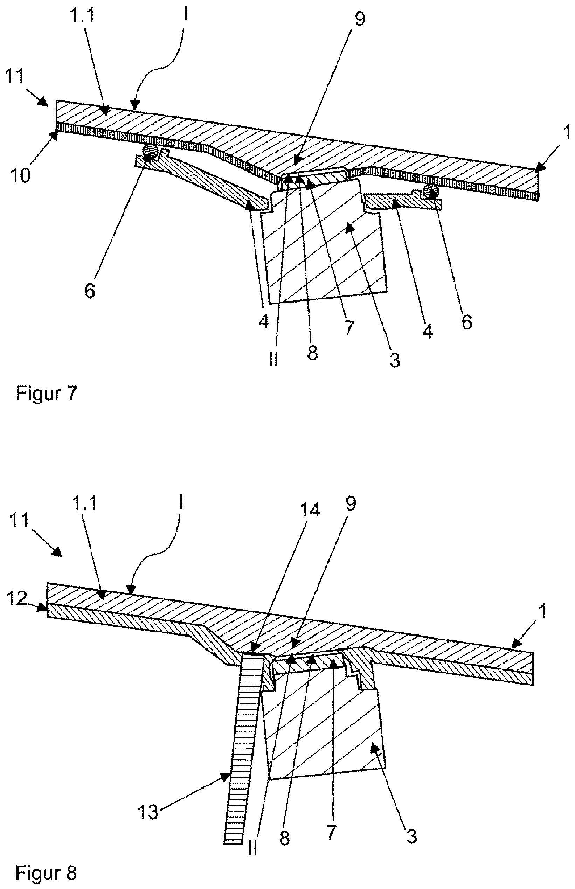

Figur 7 zeigt einen Querschnitt einer bevorzugten Ausführungsform des in Figur 6 dargestellten erfindungsgemäßen Anbauteils, bei der das Trägerteil dem im Stand der Technik verwendeten Kameraträger (4) mit einer Ringdichtung (6) (siehe auch Figur 1) entspricht.

Der transparente thermoplastische Kunststoff (1.1) der Abdeckung (1) hat an seiner Innenseite (II) in Richtung der Kameralinse (7) eine lokale Verdickung (9) und reicht somit bis an die Kameralinse (7) heran. Dies führt dazu, dass die Abdeckung (1) annähernd bündig mit der Kameralinse (7) verbunden ist und der zwischen Kameralinse (7) und der Innenseite (II) des transparenten thermoplastischen Kunststoffs (1.1) der Abdeckung (1) gebildete Hohlraum mit Luft (8) minimiert ist. Auf diese Weise kann das Beschlagen der Linse (7) oder der Innenseite (II) des transparenten thermoplastischen Kunststoffs (1.1) der Abdeckung (1) durch Kondensation von Wasserdampf minimiert werden. Der thermoplastische Kunststoff (1.1) ist im Bereich außerhalb der Verdickung (9) beispielsweise 3 mm dick und im Bereich der Verdickung (9) um maximal 4 mm dicker als außerhalb des Bereichs der Verdickung (9).

Bei dieser Ausführungsform ist zudem bei Einsatz einer schwarzen Folie als hinterspritzte Folie (10) im Vergleich zu dem in Figur 1 dargestellten Anbauteil (21) aus dem Stand der Technik der Querschnitt derjenigen Innenseite (II) der Abdeckung (1), welche nicht mit direkt mit einem schwarzen Material verbunden ist, reduziert. Die Fläche der Innenseite (II) der Abdeckung (1), die nicht mit einem schwarzen Material verbunden ist, entspricht in dieser Ausführungsform der Fläche der Kameralinse (7). Auf diese Weise können die optischen Eigenschaften des Anbauteils (11) verbessert werden, auch ist das Kameramodul (3) von außen weniger sichtbar.

Figur 8 zeigt einen Querschnitt einer Ausführungsform des erfindungsgemäßen Anbauteils, wobei die Düse (13) zum Anspritzen der Abdeckung (1) dargestellt ist und die Ausführungsform ansonsten im Wesentlichen der in der Figur 2 dargestellten Ausführungsform entspricht. Wie der Figur 8 zu entnehmen ist, liegt der Anspritzpunkt (14) bevorzugt im Bereich der später die lokale Verdickung (9) der Abdeckung (1) bildet. Bei derartiger Platzierung der Düse (13) kann nach dem Ausformen der Spritzgussmasse in diesem Bereich ein entsprechender Nachdruck angelegt und damit ein Einfallen beim Abkühlen der transparenten Spritzgussmasse im Spritzgusswerkzeug verhindert bzw. minimiert werden. Auf diese Weise kann eine Verschlechterung der Reflexionsoptik auf der Blendenaußenseite durch Einfallstellen vermieden werden. Der Anspritzpunkt (14) ist bevorzugt neben dem Bereich, in dem die Kameralinse (7) platziert wird, angeordnet. Durch Platzierung des Anspritzpunktes (14) außerhalb des Bereichs der Abdeckung, durch den nach Einbau des Kameramoduls (3) der Strahlengang der Kameralinse (7) verläuft, wird die Optik des Kameramoduls (3) nicht durch den Anspritzpunkt (14) beeinflusst.

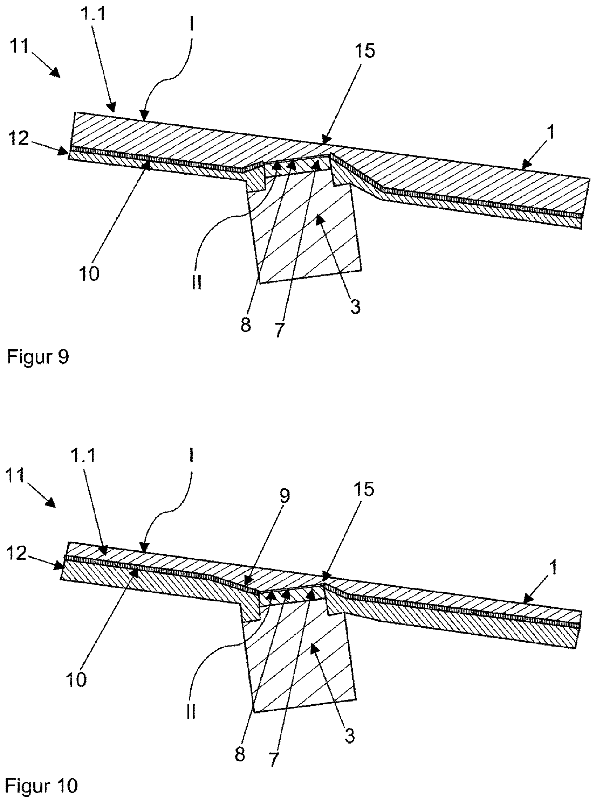

Figur 9 zeigt einen Querschnitt einer weiteren Ausführungsform eines erfindungsgemäßen Anbauteils (11), umfassend eine Abdeckung (1) aus einer mit einem transparenten thermoplastischen Kunststoff (1.1) hinterspritzten Folie (10), ein mit der Folie (10) verbundenes Trägerteil (12) aus einem thermoplastischen Kunststoff und ein in das Trägerteil (12) aufgenommenes Kameramodul (3) mit einer Linse (7), die in Richtung der Innenseite (II) des transparenten thermoplastischen Kunststoffs (1.1) angeordnet ist. Der Durchmesser der Kameralinse (7) ist beispielsweise 11 mm. Der Winkel zwischen der Blickrichtung der Kameralinse (7) und der Außenseite (I) der Abdeckung (1) ist in der gezeigten Ausführungsform von 90° verschieden. Die hinterspritzte Folie (10) weist in dem Bereich, in dem im Anbauteil (11) die Linse (7) angeordnet ist, eine Aussparung auf. Der transparente thermoplastische Kunststoff (1.1) der Abdeckung (1) hat an seiner Innenseite (II) eine lokale Ausdünnung (15). Die Kameralinse (7) ist der lokalen Ausdünnung (15) unmittelbar gegenüberliegend angeordnet. Dies führt dazu, dass die Abdeckung (1) im Wesentlichen bündig mit der Kameralinse (7) verbunden ist und der zwischen Kameralinse (7) und der Innenseite (II) des transparenten thermoplastischen Kunststoffs (1.1) der Abdeckung (1) gebildete Hohlraum mit Luft (8) ist minimiert. Auf diese Weise kann das Beschlagen der Linse (7) oder der Innenseite (II) des transparenten thermoplastischen Kunststoffs (1.1) der Abdeckung (1) durch Kondensation von Wasserdampf minimiert werden. Der thermoplastische Kunststoff (1.1) ist im Bereich außerhalb der Ausdünnung (15) beispielsweise 5 mm dick und im Bereich der Ausdünnung (15) um maximal 3 mm dünner als außerhalb des Bereichs der Ausdünnung (15).

Bei dieser Ausführungsform ist bei Einsatz einer schwarzen Folie als hinterspritzte Folie (10) im Vergleich zu dem in Figur 1 dargestellten Anbauteil (21) aus dem Stand der Technik der Querschnitt derjenigen Innenseite (II) der Abdeckung (1), welche nicht direkt mit einem schwarzen Material verbunden ist, reduziert. Die Fläche der Innenseite (II) der Abdeckung (1), die nicht mit einem schwarzen Material verbunden ist, entspricht in dieser Ausführungsform der Fläche der Kameralinse (7). Auf diese Weise können die optischen Eigenschaften des Anbauteils (11) verbessert werden, auch ist das Kameramodul (3) von außen weniger sichtbar.

Diese Ausführungsform bietet bei Einsatz einer farbigen und/oder mit einem oder mehreren Mustern versehenen Folie die Möglichkeit über die Folie Dekorelemente in das Anbauteil einzubringen.

Figur 10 zeigt einen Querschnitt einer weiteren Ausführungsform eines erfindungsgemäßen Anbauteils (11), umfassend eine Abdeckung (1) aus einer mit einem transparenten thermoplastischen Kunststoff (1.1) hinterspritzten Folie (10), ein mit der Folie (10) verbundenes Trägerteil (12) aus einem thermoplastischen Kunststoff und ein in das Trägerteil (12) aufgenommenes Kameramodul (3) mit einer Linse (7), die in Richtung der Innenseite (II) des transparenten thermoplastischen Kunststoffs (1.1) angeordnet ist. Der Durchmesser der Kameralinse (7) ist beispielsweise 11 mm. Der Winkel zwischen der Blickrichtung der Kameralinse (7) und der Außenseite (I) der Abdeckung (1) ist in der gezeigten Ausführungsform von 90° verschieden. Die hinterspritzte Folie (10) weist in dem Bereich, in dem im Anbauteil (11) die Linse (7) angeordnet ist, eine Aussparung auf. Der transparente thermoplastische Kunststoff (1.1) der Abdeckung (1) hat an seiner Innenseite (II) eine lokale Verdickung (9) und eine lokale Ausdünnung (15) des transparenten thermoplastischen Kunststoffs (1.1). Die Kameralinse (7) ist dem Bereich der Verdickung (9) und Ausdünnung (15) unmittelbar gegenüberliegend angeordnet. Dies führt dazu, dass die Abdeckung (1) im Wesentlichen bündig mit der Kameralinse (7) verbunden ist und der zwischen Kameralinse (7) und der Innenseite (II) der Abdeckung (1) gebildete Hohlraum mit Luft (8) minimiert ist. Auf diese Weise kann das Beschlagen der Linse (7) oder der Innenseite (II) der Abdeckung (1) durch Kondensation von Wasserdampf minimiert werden. Der thermoplastische Kunststoff (1.1) ist im Bereich außerhalb der Verdickung (9) und außerhalb der Ausdünnung (15) beispielsweise 5 mm dick und im Bereich der Verdickung (9) um maximal 3 mm dicker und im Bereich der Ausdünnung (15) um maximal 3 mm dünner als außerhalb des Bereichs der Verdickung (9) und der Ausdünnung (15).

Bei dieser Ausführungsform ist bei Einsatz einer schwarzen Folie als hinterspritzte Folie (10) im Vergleich zu dem in Figur 1 dargestellten Anbauteil (21) aus dem Stand der Technik der Querschnitt derjenigen Innenseite (II) der Abdeckung (1), welche nicht direkt mit einem schwarzen Material verbunden ist, reduziert. Die Fläche der Innenseite (II) der Abdeckung (1), die nicht mit einem schwarzen Material verbunden ist, entspricht in dieser Ausführungsform der Fläche der Kameralinse (7). Auf diese Weise können die optischen Eigenschaften des Anbauteils (11) verbessert werden, auch ist das Kameramodul (3) von außen weniger sichtbar.

Auch diese Ausführungsform bietet bei Einsatz einer farbigen und/oder mit einem oder mehreren Mustern versehenen Folie die Möglichkeit über die Folie Dekorelemente in das Anbauteil einzubringen.

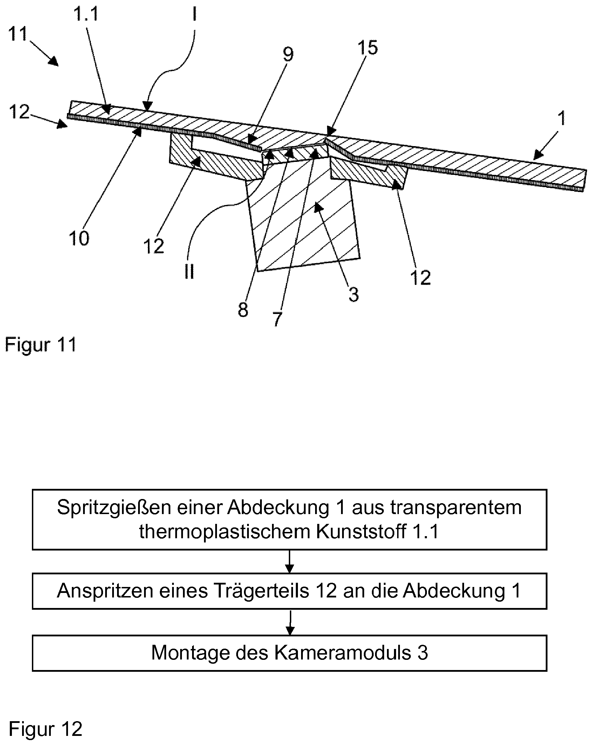

Figur 11 zeigt einen Querschnitt einer alternativen Ausführungsform eines erfindungsgemäßen Anbauteils (11), umfassend eine Abdeckung (1) aus einer mit einem transparenten thermoplastischen Kunststoff (1.1) hinterspritzten Folie (10), ein mit der Folie (10) verbundenes Trägerteil (12), und ein in das Trägerteil (12) aufgenommenes Kameramodul (3) mit einer Linse (7), die in Richtung der Innenseite (II) des transparenten thermoplastischen Kunststoffs (1.1) der Abdeckung (1) angeordnet ist. Der Durchmesser der Kameralinse (7) ist beispielsweise 11 mm. Der Winkel zwischen der Blickrichtung der Kameralinse (7) und der Außenseite (I) der Abdeckung (1) ist in der gezeigten Ausführungsform von 90° verschieden. Die hinterspritzte Folie (10) weist in dem Bereich, in dem im Anbauteil (11) die Linse (7) angeordnet ist, eine Aussparung auf. Der transparente thermoplastische Kunststoff (1.1) der Abdeckung (1) hat an seiner Innenseite (II) eine lokale Verdickung (9) und eine lokale Ausdünnung (15) des transparenten thermoplastischen Kunststoffs (1.1). Die Kameralinse (7) ist dem Bereich der Verdickung (9) und Ausdünnung (15) unmittelbar gegenüberliegend angeordnet. Dies führt dazu, dass die Abdeckung (1) im Wesentlichen bündig mit der Kameralinse (7) verbunden ist und der zwischen Kameralinse (7) und der Innenseite (II) der Abdeckung (1) gebildete Hohlraum mit Luft (8) minimiert ist. Auf diese Weise kann das Beschlagen der Linse (7) oder der Innenseite (II) der Abdeckung (1) durch Kondensation von Wasserdampf minimiert werden. Der thermoplastische Kunststoff (1.1) ist im Bereich außerhalb der Verdickung (9) und außerhalb der Ausdünnung (15) beispielsweise 5 mm dick und im Bereich der Verdickung (9) um maximal 3 mm dicker und im Bereich der Ausdünnung (15) um maximal 3 mm dünner als außerhalb des Bereichs der Verdickung (9) und der Ausdünnung (15).

Bei dieser Ausführungsform ist bei Einsatz einer schwarzen Folie als hinterspritzte Folie (10) im Vergleich zu dem in Figur 1 dargestellten Anbauteil (21) aus dem Stand der Technik der Querschnitt derjenigen Innenseite (II) der Abdeckung (1), welche nicht direkt mit einem schwarzen Material verbunden ist, reduziert. Die Fläche der Innenseite (II) der Abdeckung (1), die nicht mit einem schwarzen Material verbunden ist, entspricht in dieser Ausführungsform der Fläche der Kameralinse (7). Auf diese Weise können die optischen Eigenschaften des Anbauteils (11) verbessert werden, auch ist das Kameramodul (3) von außen weniger sichtbar.

Auch diese Ausführungsform bietet bei Einsatz einer farbigen und/oder mit einem oder mehreren Mustern versehenen Folie die Möglichkeit über die Folie Dekorelemente in das Anbauteil einzubringen.

Figur 12 zeigt ein Fließschema eines erfindungsgemäßen Verfahrens zur Herstellung eines erfindungsgemäßen Anbauteils (11). Bei diesem Verfahren werden die Abdeckung (1) und das Trägerteil (12) als 2-Komponenten Spritzgussteil gefertigt. In einem ersten Verfahrensschritt wird die Abdeckung (1) aus einem transparenten thermoplastischen Kunststoff (1.1) spritzgegossen. In einem zweiten Verfahrensschritt wird das Trägerteil (12) aus einem thermoplastischen, bevorzugt schwarzen Kunststoff an die Abdeckung (1) angegossen. Die Abdeckung (1) weist an der Innenseite (II) eine lokale Verdickung (9) und/oder eine lokale Ausdünnung (15) auf.

In einem weiteren Verfahrensschritt wird das Kameramodul (3) montiert, wobei das Kameramodul derartig angeordnet wird, dass die Kameralinse (7) der lokalen Verdickung (9) und/oder der lokalen Ausdünnung (15) des transparenten thermoplastischen Kunststoffs (1.1) der Abdeckung (1) unmittelbar gegenüberliegt.

Optional kann Verfahren das Beschichten, bevorzugt das Flutbeschichten, mit einem Schutzbezug als Verfahrensschritt umfassen.

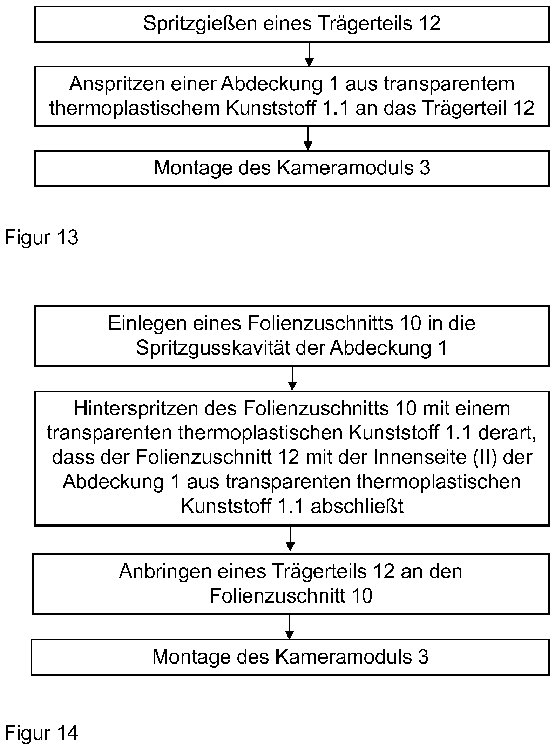

Figur 13 zeigt ein Fließschema eines erfindungsgemäßen alternativen Verfahrens zur Herstellung eines erfindungsgemäßen Anbauteils (11). Bei diesem Verfahren werden die Abdeckung (1) und das Trägerteil (12) als 2-Komponenten Spritzgussteil gefertigt. In einem ersten Verfahrensschritt wird das Trägerteil (12) aus einem thermoplastischen, bevorzugt schwarzen Kunststoff spritzgegossen. In einem zweiten Verfahrensschritt wird die Abdeckung (1) aus einem transparenten thermoplastischen Kunststoff (1.1) an das Trägerteil (12) angegossen. Die Abdeckung (1) weist an der Innenseite (II) eine lokale Verdickung (9) und/oder Ausdünnung (15) auf.

In einem weiteren Verfahrensschritt wird das Kameramodul (3) montiert, wobei das Kameramodul derartig angeordnet wird, dass die Kameralinse (7) der lokalen Verdickung (9) und/oder der lokalen Ausdünnung (15) des transparenten thermoplastischen Kunststoffs (1.1) der Abdeckung (1) unmittelbar gegenüberliegt.

Optional kann das Verfahren das Beschichten, bevorzugt das Flutbeschichten, mit einem Schutzbezug als Verfahrensschritt umfassen.

Figur 14 zeigt ein Fließschema eines erfindungsgemäßen alternativen Verfahrens zur Herstellung eines erfindungsgemäßen Anbauteils (11). Bei diesem Verfahren wird die Abdeckung (1) als ein aus einer mit einem transparenten thermoplastischen Kunststoff (1.1) hinterspritzten Folie (10) bestehendes Spritzgussteil gefertigt. In einem ersten Verfahrensschritt wird ein bevorzugt schwarzer Folienzuschnitt in die Spritzgusskavität einer Abdeckung (1) eingelegt. In einem zweiten Verfahrensschritt wird der Folienzuschnitt (10) mit einem transparenten thermoplastischen Kunststoff (1.1) derart hinterspritzt, dass der Folienzuschnitt (10) mit der Innenseite (II) des transparenten thermoplastischen Kunststoffs (1.1) der Abdeckung (1) abschließt. Die Abdeckung (1) weist an der Innenseite (II) eine lokale Verdickung (9) und/oder Ausdünnung (15) auf.

In einem dritten Verfahrensschritt wird ein Trägerteil (12) an den Folienzuschnitt (10) angebracht. Das Trägerteil (12) kann beispielsweise als Spritzgussteil aus thermoplastischem Kunststoff gefertigt sein. Es ist aber auch jede andere Aufnahmevorrichtung für ein Kameramodul (3) als Trägerteil (12) geeignet, so kann das Trägerteil (12) beispielsweise auch analog zu dem im Stand der Technik bekannten Anbauteil (11) als Kameraträger (4) mit Ringdichtung (6) ausgeformt sein.

In einem weiteren Verfahrensschritt wird das Kameramodul (3) montiert, wobei das Kameramodul derartig angeordnet wird, dass die Kameralinse (7) der lokalen Verdickung (9) und/oder der lokalen Ausdünnung (15) des transparenten thermoplastischen Kunststoffs (1.1) der Abdeckung (1) unmittelbar gegenüberliegt.

Optional kann Verfahren das Beschichten, bevorzugt das Flutbeschichten, mit einem Schutzbezug als Verfahrensschritt umfassen. Wenn das Trägerteil (12) nicht als Spritzgussteil ausgebildet ist, können in dieses auch keine Befestigungselemente oder Kabelkanäle integriert werden, so dass dieses Verfahren in dieser Hinsicht nicht bevorzugt ist. Ein nach dem in Figur 14 dargestellten Verfahren hergestelltes Anbauteil (11) aufweisend beispielsweise ein analog zum Stand der Technik ausgeformtes Trägerteil kann sich jedoch insbesondere für die Fertigung von Kleinserien eignen, da die Werkzeugkosten in diesem Fall geringer sind als bei einem als 2-Komponenten-Spritzgussteil ausgebildeten Anbauteil (11).

### Bezugszeichenliste

- 1: Abdeckung, erfindungsgemäße Abdeckung
- 1.1: transparenter thermoplastischer Kunststoff
- 2: Innenschale
- 3: Kameramodul
- 4: Kameraträger
- 5: Beflockung
- 6: Ringdichtung
- 7: Kameralinse
- 8: Hohlraum mit Luft
- 9: Verdickung
- 10: Folie/Folienzuschnitt
- 11: Anbauteil/Fahrzeuganbauteil, erfindungsgemäßes Anbauteil/Fahrzeuganbauteil
- 12: Trägerteil
- 13: Düse
- 14: Anspritzpunkt
- 15: Ausdünnung
- I: Außenseite/Außenhaut
- II: Innenseite/Innenhaut
- 20: Abdeckung, Abdeckung nach dem Stand der Technik
- 21: Anbauteil, Anbauteil nach dem Stand der Technik

## Patentansprüche

1. Fahrzeuganbauteil (11) mit einem integrierten Kameramodul (3), welches eine Frontscheibe, eine Heckscheibe, eine Seitenscheibe, eine Dachscheibe, eine Leiste, ein Stoßfänger, ein Schweller, ein Spoiler, eine Lampenabdeckung oder eine Blende ist, umfassend:
- eine Abdeckung (1) mit einer Außenseite (I) und einer Innenseite (II), wobei die Abdeckung (1) zumindest abschnittsweise aus einem transparenten thermoplastischen Kunststoff (1.1) besteht;
- ein Trägerteil (12), das an der Innenseite (II) der Abdeckung (1) angeordnet ist und in dem ein Kameramodul (3) angeordnet ist;
wobei die Abdeckung (1) an der Innenseite (II) eine lokale Verdickung (9) und/oder eine lokale Ausdünnung (15) des transparenten thermoplastischen Kunststoffs (1.1) aufweist;
und wobei das Kameramodul (3) zumindest eine Kameralinse (7) umfasst und derartig in dem Trägerteil (12) angeordnet ist, dass die zumindest eine Kameralinse (7) der lokalen Verdickung (9) und/oder der lokalen Ausdünnung (15) unmittelbar gegenüberliegend angeordnet ist, wobei
i) der transparente thermoplastische Kunststoff (1.1) der Abdeckung (1) im Bereich der lokalen Verdickung und/oder Ausdünnung bis an die Kameralinse (7) heranreicht, so dass die Innenseite der Abdeckung (1) annähernd bündig mit der Kameralinse (7) verbunden ist, oder
ii) der transparente thermoplastische Kunststoff (1.1) im Bereich der lokalen Verdickung (9) und/oder der lokalen Ausdünnung (15) mit der zumindest einen Kameralinse (7) stoffschlüssig verbunden ist.

2. Fahrzeuganbauteil (11) nach Anspruch 1, wobei die Außenseite (I) der Abdeckung (1) im Wesentlichen die Form einer planen Fläche oder einer gekrümmten Fläche hat.

3. Fahrzeuganbauteil (11) nach einem der Ansprüche 1 bis 2, wobei in den transparenten thermoplastischen Kunststoff (1.1) der Abdeckung (1) an der Innenseite (II) in Richtung der Kameralinse (7) Strukturen, bevorzugt Krümmungen, Prismen oder Fresneloptiken, eingebracht sind.

4. Fahrzeuganbauteil (11) nach einem der Ansprüche 1 bis 3, wobei das Trägerteil (12) für das Kameramodul (3) aus einem thermoplastischen Kunststoff, bevorzugt aus einem opaken, besonders bevorzugt aus einem farbigen, insbesondere einem dunkelfarbigen, ganz besonders bevorzugt aus einem schwarzen thermoplastischen Kunststoff besteht.

5. Fahrzeuganbauteil (11) nach Anspruch 4, wobei in den thermoplastischen Kunststoff des Trägerteils (12) eine Aussparung zur Aufnahme des Kameramoduls (3), Befestigungselemente für das Kameramodul (3) und/oder Aussparungen für mit dem Kameramodul (3) verbundene Kabel eingebracht sind.

6. Fahrzeuganbauteil (11) nach einem der Ansprüche 4 oder 5, wobei die Abdeckung (1) aus transparentem thermoplastischen Kunststoff (1.1) besteht und bevorzugt die Abdeckung (1) und das Trägerteil (12) als 2-Komponenten-Spritzgussteil ausgebildet sind.

7. Fahrzeuganbauteil (11) nach einem der Ansprüche 1 bis 6, wobei das Fahrzeuganbauteil (11) eine polymere Folie (10), bevorzugt eine hinterspritzte polymere Folie (10), umfasst, die bevorzugt zwischen der Abdeckung (1) und dem Trägerteil (12) angeordnet ist und wobei die Folie (10) bevorzugt opak, besonders bevorzugt farbig, insbesondere dunkelfarbig und ganz besonders bevorzugt schwarz ist.

8. Fahrzeuganbauteil (11) nach einem der Ansprüche 1 bis 7, wobei die Abdeckung (1) zumindest an der Außenseite (I) mit einer Schutzbeschichtung beschichtet ist und die Schutzbeschichtung bevorzugt zumindest ein Polysiloxan, ein Polyacrylat, ein Polymethacrylat und/oder ein Polyurethan enthält oder daraus besteht und die Schutzschicht bevorzugt mit einer Dicke von 1 µm bis 50 µm, besonders bevorzugt von 2 µm bis 25 µm aufgebracht ist.

9. Verfahren zur Herstellung eines Fahrzeuganbauteils (11) mit einem integrierten Kameramodul (3) nach einem der Ansprüche 1 bis 8, wobei
- in einem ersten Schritt eine Abdeckung (1), die zumindest abschnittsweise aus einem transparenten thermoplastischen Kunststoff (1.1) besteht und die an ihrer Innenseite (II) eine lokale Verdickung (9) und/oder eine lokale Ausdünnung (15) des transparenten thermoplastischen Kunststoffs (1.1) aufweist, mittels eines Spritzgussverfahrens hergestellt wird und
in einem zweiten Schritt an die Abdeckung (1) an der Innenseite (II) ein Trägerteil (12) aus thermoplastischen Kunststoff für das Kameramodul (3), das zumindest eine Kameralinse (7) umfasst, angespritzt wird;
oder
in einem ersten Schritt ein aus einem thermoplastischen Kunststoff bestehendes Trägerteil (12) für das Kameramodul (3), das zumindest eine Kameralinse (7) umfasst, mittels eines Spritzgussverfahrens hergestellt wird und
in einem zweiten Schritt an das Trägerteil (12) eine Abdeckung (1), die zumindest abschnittsweise aus einem transparenten thermoplastischen Kunststoff (1.1) besteht und an ihrer Innenseite (II) eine lokale Verdickung (9) und/oder eine lokale Ausdünnung (15) des transparenten thermoplastischen Kunststoffs (1.1) aufweist, derartig angespritzt wird, dass die Innenseite (II) der Abdeckung (1) mit dem Trägerteil (12) verbunden wird;
- in einem dritten Schritt das Kameramodul (3), derartig in das Trägerteil (12) aufgenommen wird, dass die mindestens eine Kameralinse (7) der lokalen Verdickung (9) und/oder der lokalen Ausdünnung (15) unmittelbar gegenüberliegend angeordnet wird.

10. Verfahren nach Anspruch 9, wobei die Abdeckung (1) und das daran angebundene Trägerteil (12) im 2-Komponenten-Spritzgussverfahren oder im 2-Komponenten-Spritzprägeverfahren mit Wendeplattentechnologie gefertigt werden.

11. Verfahren zur Herstellung eines Fahrzeuganbauteils (11) mit einem integrierten Kameramodul (3) nach einem der Ansprüche 1 bis 8, wobei
- in einem ersten Schritt eine Abdeckung (1), die zumindest abschnittsweise aus einem transparenten thermoplastischen Kunststoff (1.1) besteht und die an ihrer Innenseite (II) eine lokale Verdickung (9) und/oder eine lokale Ausdünnung (15) des transparenten thermoplastischen Kunststoffs aufweist, als 1-Komponenten Spritzgussteil mit hinterspritzter polymerer Folie (10) hergestellt wird, wobei die Folie (10) an der Innenseite (II) der Abdeckung (1) angeordnet ist und bevorzugt eine Aussparung an der Stelle hat, an der die mindestens eine Kameralinse (7) angeordnet wird;
- in einem zweiten Schritt ein Trägerteil (12) für das Kameramodul (3) bereitgestellt wird;
- in einem dritten Schritt das Trägerteil (12) an der hinterspritzen polymeren Folie (10) angebracht wird und
- in einem vierten Schritt das Kameramodul (3), das zumindest eine Kameralinse (7) umfasst, derartig in das Trägerteil (12) aufgenommen wird, dass die Kameralinse (7) der lokalen Verdickung (9) und/oder der lokalen Ausdünnung (15) unmittelbar gegenüberliegend angeordnet wird.

12. Verfahren nach einem der Ansprüche 9 bis 11, wobei die Spritzgussmasse bei der Fertigung der Abdeckung (1) über einen seitlichen Fächeranguss und/oder seitliche Anspritzpunkte und/oder über einen Anspritzpunkt (14) im Bereich der lokalen Verdickung (9) und/oder der lokalen Ausdünnung (15) eingebracht wird.

13. Verfahren nach einem der Ansprüche 9 bis 12, wobei eine Schutzbeschichtung zumindest auf eine Außenseite des Fahrzeuganbauteils (11) oder der Abdeckung (1) und/oder des Trägerteils (12) aufgebracht wird.

14. Verwendung eines Fahrzeuganbauteils (11) nach einem der Ansprüche 1 bis 8 zur Integration eines Kameramoduls (3) in Fahrzeugen, bevorzugt Kraftfahrzeugen, Lastkraftwagen, Bussen, insbesondere zur Integration eines Kameramoduls in einer Scheibe, insbesondere einer Frontscheibe, einer Heckscheibe, einer Seitenscheibe oder einer Dachscheibe, in einer Leiste, insbesondere einer Seitenleiste, einer Frontleiste, einer Rückleiste oder einer Zierleiste, in einem Stoßfänger, in einem Schweller, in einem Spoiler, in einer Lampenabdeckung oder in einer Blende, insbesondere einer Säulenblende, besonders bevorzugt in einer B-Säulenblende.

## Claims

1. Vehicle add-on part (11) having an integrated camera module (3), which is a front window, a rear window, a side window, a roof panel, a trim strip, a bumper, a sill, a spoiler, a lamp cover, or a panel, comprising:
- a cover (1) with an outer side (I) and an inner side (II), wherein the cover (1) consists, at least in sections, of a transparent thermoplastic material (1.1);
- a carrier part (12) that is arranged on the inner side (II) of the cover (1) and in which a camera module (3) is arranged;
wherein the cover (1) has, on the inner side (II), a local thickening (9) and/or a local thinning (15) of the transparent thermoplastic material (1.1);
and wherein the camera module (3) includes at least one camera lens (7) and is arranged in the carrier part (12) such that the at least one camera lens (7) is arranged directly opposite the local thickening (9) and/or the local thinning (15), wherein
i) the transparent thermoplastic material (1.1) of the cover (1) reaches all the way to the camera lens (7) in the region of the local thickening and/or thinning such that the inner side of the cover (1) is connected almost flush with the camera lens (7), or
ii) the transparent thermoplastic material (1.1) is connected in a materially integral manner to the at least one camera lens (7) in the region of the local thickening (9) and/or the local thinning (15).

2. Vehicle add-on part (11) according to claim 1, wherein the outer side (I) of the cover (1) has substantially the form of a planar surface or a curved surface.

3. Vehicle add-on part (11) according to one of claims 1 through 2, wherein structures, preferably curvatures, prisms, or Fresnel optics, are introduced into the transparent thermoplastic material (1.1) of the cover (1) on the inner side (II) in the direction of the camera lens (7).

4. Vehicle add-on part (11) according to one of claims 1 through 3, wherein the carrier part (12) for the camera module (3) is made of a thermoplastic material, preferably of an opaque, particularly preferably of a colored, in particular a dark-colored, most particularly preferably of a black thermoplastic material.

5. Vehicle add-on part (11) according to claim 4, wherein a recess for holding the camera module (3), fastening elements for the camera module (3), and/or recesses for cables connected to the camera module (3) are introduced into the thermoplastic material of the carrier part (12).

6. Vehicle add-on part (11) according to one of claims 4 or 5, wherein the cover (1) is made of transparent thermoplastic material (1.1), and the cover (1) and the carrier part (12) are preferably implemented as a 2-component injection molded part.

7. Vehicle add-on part (11) according to one of claims 1 through 6, wherein the vehicle add-on part (11) includes a polymeric film (10), preferably a back-injected polymeric film (10), which is preferably arranged between the cover (1) and the carrier part (12), and wherein the film (10) is preferably opaque, particularly preferably colored, in particular dark-colored, and most particularly preferably is black.

8. Vehicle add-on part (11) according to one of claims 1 to 7, wherein the cover (1) is coated, at least on the outer side (I), with a protective coating and the protective coating preferably contains or is made of at least one polysiloxane, one polyacrylate, one polymethacrylate, and/or one polyurethane, and the protective layer is preferably applied with a thickness of 1 µm to 50 µm, particularly preferably of 2 µm to 25 µm.

9. Method for producing a vehicle add-on part (11) having an integrated camera module (3) according to one of claims 1 through 8, wherein
- in a first step, a cover (1) that consists, at least in sections, of a transparent thermoplastic material (1.1) and that has, on its inner side (II), a local thickening (9) and/or a local thinning (15) of the transparent thermoplastic material (1.1) is produced by means of an injection molding process, and
- in a second step, a carrier part (12) made of thermoplastic material for the camera module (3) that includes at least one camera lens (7) is injection molded onto the cover (1), on the inner side (II);
or
- in a first step, a carrier part (12) made of a thermoplastic material for the camera module (3) that includes at least one camera lens (7) is produced by means of an injection molding process, and
- in a second step, a cover (1) that is made, at least in sections, of a transparent thermoplastic material (1.1) and has, on its inner side (II), a local thickening (9) and/or a local thinning (15) of the transparent thermoplastic material (1.1) is molded onto the carrier part (12) such that the inner side (II) of the cover (1) is connected to the carrier part (12);
- in a third step, the camera module (3) is held in the carrier part (12) such that the at least one camera lens (7) is arranged directly opposite the local thickening (9) and/or the local thinning (15).

10. Method according to claim 9, wherein the cover (1) and the carrier part (12) connected thereon are produced in the 2-component injection molding process or in the 2-component injection-compression molding process with turning platen technology.

11. Method for producing a vehicle add-on part (11) having an integrated camera module (3) according to one of claims 1 through 8, wherein
- in a first step, a cover (1) that is made, at least in sections, of a transparent thermoplastic material (1.1) and that has, on its inner side (II), a local thickening (9) and/or a local thinning (15) of the transparent thermoplastic material is produced as a 1-component injection molded part with a back-injected polymeric film (10), wherein the film (10) is arranged on the inner side (II) of the cover (1) and preferably has a recess at the location at which the at least one camera lens (7) is arranged;
- in a second step, a carrier part (12) for the camera module (3) is provided;
- in a third step, the carrier part (12) is attached on the back-injected polymeric film (10), and
- in a fourth step, the camera module (3) that includes at least one camera lens (7) is held in the carrier part (12) such that the camera lens (7) is arranged directly opposite the local thickening (9) and/or the local thinning (15).

12. Method according to one of claims 9 through 11, wherein the injection molding compound is introduced, during production of the cover (1), via a lateral fan sprue and/or lateral injection points and/or via an injection point (14) in the region of the local thickening (9) and/or the local thinning (15).

13. Method according to one of claims 9 through 12, wherein a protective coating is applied at least on an outer side of the vehicle add-on part (11) or of the cover (1) and/or of the carrier part (12).

14. Use of a vehicle add-on part (11) according to one of claims 1 through 8 for integrating a camera module (3) in vehicles, preferably motor vehicles, trucks, buses, in particular for integrating a camera module in a window pane, in particular a front window pane, a rear window pane, a side window pane, or a roof panel, in a trim strip, in particular a side trim strip, a front trim strip, a rear trim strip, or a decorative trim strip, in a bumper, in a sill, in a spoiler, in a lamp cover, or in a panel, in particular a column panel, particularly preferably in a B-column panel.

## Revendications

1. Pièce rapportée de véhicule (11) avec un module de caméra intégré (3), qui est une vitre avant, une vitre arrière, une vitre latérale, un panneau de toit, une bande de garniture, un pare-chocs, un seuil, un becquet, un couvercle de lampe ou un panneau, comprenant :
- un couvercle (1) avec un côté extérieur (I) et un côté intérieur (II), dans lequel le couvercle (1) se compose, au moins par sections, d'un matériau thermoplastique transparent (1.1) ;
- une pièce de support (12) qui est disposée sur le côté intérieur (II) du couvercle (1) et dans laquelle est disposé un module de caméra (3) ;
dans lequel le couvercle (1) présente, sur le côté intérieur (II), un épaississement local (9) et/ou un amincissement local (15) du matériau thermoplastique transparent (1.1) ;
et dans lequel le module de caméra (3) comprend au moins une lentille de caméra (7) et est disposé dans la pièce de support (12) de sorte que la au moins une lentille de caméra (7) est disposée directement en face de l'épaississement local (9) et/ou de l'amincissement local (15), dans lequel
i) la matière thermoplastique transparente (1.1) du couvercle (1) s'étend jusqu'à la lentille de caméra (7) dans la zone de l'épaississement local et/ou de l'amincissement local, de sorte que la face intérieure du couvercle (1) est reliée presque à fleur avec la lentille de caméra (7), ou bien
ii) la matière thermoplastique transparente (1.1) est reliée d'une manière matériellement intégrale à l'au moins une lentille de caméra (7) dans la région de l'épaississement local (9) et/ou de l'amincissement local (15).

2. Pièce rapportée de véhicule (11) selon la revendication 1, dans laquelle le côté extérieur (I) du couvercle (1) a sensiblement la forme d'une surface plane ou d'une surface courbe.

3. Pièce rapportée de véhicule (11) selon l'une des revendications 1 à 2, dans laquelle des structures, de préférence des courbures, des prismes ou des optiques de Fresnel, sont introduites dans le matériau thermoplastique transparent (1.1) du couvercle (1) sur le côté intérieur (II) en direction de la lentille de caméra (7).

4. Pièce rapportée de véhicule (11) selon l'une des revendications 1 à 3, dans laquelle la pièce de support (12) pour le module de caméra (3) est constituée d'une matière thermoplastique, de préférence d'une matière thermoplastique opaque, de manière particulièrement préférée d'une matière thermoplastique colorée, notamment de couleur sombre, de manière particulièrement préférée d'une matière thermoplastique noire.

5. Pièce rapportée de véhicule (11) selon la revendication 4, dans laquelle un évidement destiné à recevoir le module de caméra (3), des éléments de fixation pour le module de caméra (3), et/ou des évidements pour les câbles reliés au module de caméra (3) sont introduits dans le matériau thermoplastique de la pièce de support (12).

6. Pièce rapportée de véhicule (11) selon l'une des revendications 4 ou 5, dans laquelle le couvercle (1) est en matière thermoplastique transparente (1.1), et le couvercle (1) et la pièce de support (12) sont de préférence réalisés comme une pièce moulée par injection à 2 composants.

7. Pièce rapportée de véhicule (11) selon l'une des revendications 1 à 6, dans laquelle la pièce rapportée de véhicule (11) comprend un film polymère (10), de préférence un film polymère rétro-injecté (10), qui est de préférence disposé entre le couvercle (1) et la pièce de support (12), et dans laquelle le film (10) est de préférence opaque, de manière particulièrement préférée coloré, notamment de couleur sombre, et de manière particulièrement préférée noir.

8. Pièce rapportée de véhicule (11) selon l'une des revendications 1 à 7, dans laquelle le couvercle (1) est revêtu, au moins sur la face extérieure (I), d'une couche protectrice et la couche protectrice contient de préférence ou est constituée d'au moins un polysiloxane, un polyacrylate, un polyméthacrylate et/ou un polyuréthane, et la couche protectrice est de préférence appliquée avec une épaisseur de 1 µm à 50 µm, de manière particulièrement préférée de 2 µm à 25 µm.

9. Procédé de fabrication d'une pièce rapportée de véhicule (11) avec un module de caméra (3) intégré selon l'une des revendications 1 à 8, dans lequel
- dans une première étape, on fabrique, au moyen d'un procédé de moulage par injection, un couvercle (1) qui est constitué, au moins par sections, d'une matière thermoplastique transparente (1.1) et qui présente, sur sa face intérieure (II), un épaississement local (9) et/ou un amincissement local (15) de la matière thermoplastique transparente (1.1), et
- dans une deuxième étape, on moule par injection sur le couvercle (1), sur la face intérieure (II), une pièce de support (12) en matière thermoplastique pour le module de caméra (3) qui comprend au moins une lentille de caméra (7) ;
ou
- dans une première étape, une pièce de support (12) en matière thermoplastique pour le module de caméra (3), qui comprend au moins une lentille de caméra (7), est fabriquée au moyen d'un procédé de moulage par injection, et
- dans une deuxième étape, on moule sur la pièce de support (12) un couvercle (1) qui est constitué, au moins par sections, d'un matériau thermoplastique transparent (1.1) et qui présente, sur sa face intérieure (II), un épaississement local (9) et/ou un amincissement local (15) du matériau thermoplastique transparent (1.1), de telle sorte que la face intérieure (II) du couvercle (1) soit reliée à la pièce de support (12) ;
- dans une troisième étape, le module de caméra (3) est maintenu dans la pièce de support (12) de telle sorte que l'au moins une lentille de caméra (7) soit disposé directement en face de l'épaississement local (9) et/ou de l'amincissement local (15).

10. Procédé selon la revendication 9, dans lequel le couvercle (1) et la pièce de support (12) reliée à celui-ci sont fabriqués selon le procédé de moulage par injection à 2 composants ou selon le procédé de moulage par injection-compression à 2 composants avec la technique du plateau tournant.

11. Procédé de fabrication d'une pièce rapportée de véhicule (11) avec un module de caméra intégré (3) selon l'une des revendications 1 à 8, dans lequel
- dans une première étape, un couvercle (1) qui est fabriqué, au moins par sections, en un matériau thermoplastique transparent (1. 1), qui présente sur sa face intérieure (II) un épaississement local (9) et/ou un amincissement local (15) de la matière thermoplastique transparente, est fabriqué sous la forme d'une pièce moulée par injection à un composant avec une feuille polymère (10) réinjectée, la feuille (10) étant disposée sur la face intérieure (II) du couvercle (1) et présentant de préférence un évidement à l'endroit où est disposé l'au moins une lentille de caméra (7) ;
- dans une deuxième étape, une pièce de support (12) pour le module de caméra (3) est prévue ;
- dans une troisième étape, la pièce de support (12) est fixée sur le film polymère rétro-injecté (10), et
- dans une quatrième étape, le module de caméra (3) qui comprend au moins une lentille de caméra (7) est maintenu dans la pièce de support (12) de sorte que la lentille de caméra (7) est disposée directement en face de l'épaississement local (9) et/ou de l'amincissement local (15).

12. Procédé selon l'une des revendications 9 à 11, dans lequel la masse de moulage par injection est introduite, lors de la fabrication du couvercle (1), par l'intermédiaire d'une carotte en éventail latérale et/ou de points d'injection latéraux et/ou d'un point d'injection (14) dans la zone de l'épaississement local (9) et/ou de l'amincissement local (15).

13. Procédé selon l'une des revendications 9 à 12, dans lequel un revêtement de protection est appliqué au moins sur une face extérieure de la pièce rapportée de véhicule (11) ou du couvercle (1) et/ou de la pièce de support (12).

14. Utilisation d'une pièce rapportée de véhicule (11) selon l'une des revendications 1 à 8 pour l'intégration d'un module de caméra (3) dans des véhicules, de préférence des véhicules automobiles, des camions, des bus, en particulier pour l'intégration d'un module de caméra dans une vitre, en particulier une vitre avant, une vitre arrière, dans une vitre, notamment une vitre avant, une vitre arrière, une vitre latérale, ou un panneau de toit, dans une baguette d'habillage, notamment une baguette d'habillage latérale, une baguette d'habillage avant, une baguette d'habillage arrière, ou une baguette d'habillage décorative, dans un pare-chocs, dans un bas de caisse, dans un becquet, dans un cache-lampes, ou dans un panneau, notamment un panneau de colonne, de manière particulièrement préférée dans un panneau de colonne B.
